# EUROPEAN PATENT APPLICATION

(11) **EP 2 857 942 A1**
(43) Date of publication of application: **08.04.2015**
(21) Application number: 12877992.3
(22) Date of filing: 29.05.2012
(51) Int. Cl.: G06F 3/048, G06F 3/033

(54) **VEHICLE-USE DISPLAY APPARATUS**

(71) Applicant: Honda Motor Co., Ltd., Minato-ku Tokyo 107-8556 (JP)
(72) Inventor: KISHIMOTO Yuya, Wako-shi Saitama 351-0193 (JP); MATSUMOTO Yoshiyuki, Wako-shi Saitama 351-0193 (JP); HASHIMOTO Toshihiro, Wako-shi Saitama 351-0193 (JP); MURAYAMA Hisashi, Wako-shi Saitama 351-0193 (JP)
(74) Representative: Herzog, Markus
(86) International application number: PCT/JP2012/063772
(87) International publication number: WO 2013/179390

(57) **Abstract**

The purpose of the present invention is to provide a vehicle-use display apparatus such that operation time required therefor can be shortened and driver distraction can be prevented. A tier (an upper-level layer, a middle-level layer, or a lower-level layer, for example) is selected on the vehicle-use display apparatus (12) by contact made to a contact part (40, 56). Further, by making a gesture in which contact with the contact part (40, 56) is kept while moving the contact position, it is possible to shift through a plurality of menu options included in the selected tier and make a tentative selection. Then, when the passenger has stopped contacting the contact part (40, 56), selection of the menu option that was tentatively selected at that time is finalized and an onboard device (20, 22) function or process corresponding to the finalized selected menu option is executed.

## Description

### Technical Field

The present invention relates to a vehicle (vehicle-use) display apparatus, which displays a plurality of menu options included within plural tiers relating to operations of at least one onboard device that is mounted in a vehicle.

### Background Art

In Japanese Laid-Open Patent Publication No. 2012-022393 (hereinafter referred to as "JP 2012-022393A"), a vehicle display apparatus is disclosed in which a desired menu option is displayed as a selection target from among a plurality of hierarchical or tiered menu options relating to operations of an onboard device that is mounted in the vehicle (claim 1).

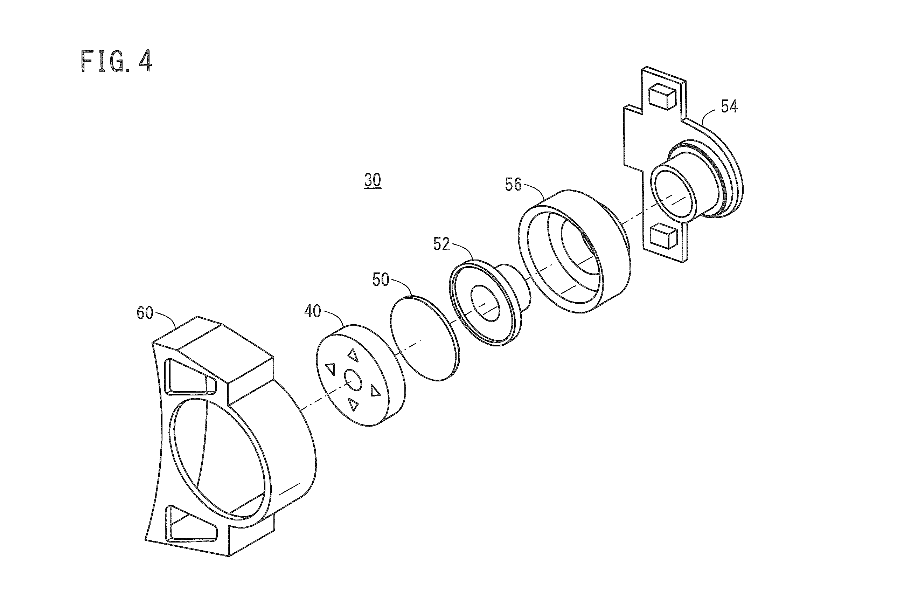

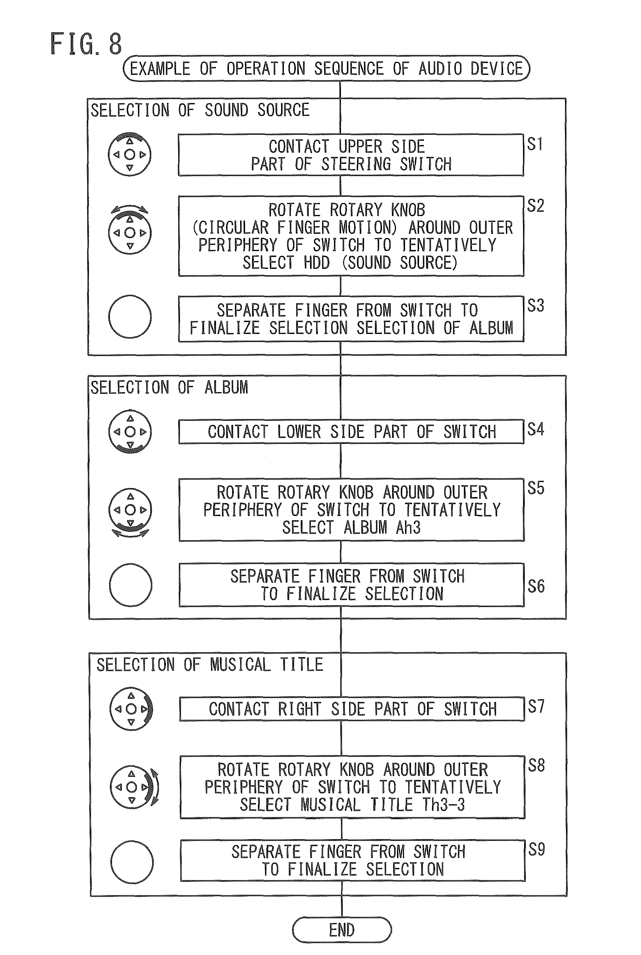

More specifically, according to JP 2012-022393A, in a first tier menu 41 of a highest-level layer, when a specified menu option is selected using a cursor 48, a second tier menu 42 is displayed, which is of a lower layer than the first tier and relates to the selected first tier menu. In a second tier menu 42, when a specified menu option is selected using the cursor 48, a third tier menu 43 is displayed, which is of a lower layer than the second tier and relates to the selected second tier menu (FIGS. 4 and 8). For displaying menus of different tiers, a long-push or a double click operation is required to be made with respect to a part of a steering switch 80 in the form of a cross-shaped key (paragraphs [0080], [0087]).

Further, according to JP 2012-022393A, in a condition in which the first through third tier menus 41, 42, 43 are displayed, the cursor 48 can be moved to another first tier menu 41 adjacent to the displayed first tier menu 41. As a result, when the first tier menu 41 is returned to, it is unnecessary to operate the steering switch 80 multiple times, and with one operation, the first tier menu 41 can be restored (abstract and paragraph [0015]).

### Summary of Invention

With the operating means in JP 2012-022393A, for making operations apart from those in relation to the first tier (highest-level layer), it is necessary for the long-push or the double click operation of the steering switch 80 to be performed, and time is spent in performing such operations.

In addition, for example, when it is desired to operate the third tier menu, the first tier menu must be selected, and thereafter, the second tier menu must be selected, and further, the third tier menu must be selected. For these reasons, time is required for such operations, which causes driver distraction.

The present invention has been devised taking into consideration the aforementioned problems, and has the object of providing a vehicle display apparatus, which can shorten the operating time, together with preventing driver distraction.

A vehicle display apparatus according to the present invention is mounted in a vehicle, and displays a plurality of menu options included within plural tiers relating to operations of at least one onboard device. The vehicle display apparatus comprises an operating element that is capable of implementing a function or process of the onboard device in accordance with an operation of an occupant of the vehicle, a gesture judgment unit configured to determine a gesture made with respect to the operating element, and a display unit configured to display alongside one another the plurality of menu options respectively of the plural tiers, or to display the plurality of menu options of a specified tier corresponding to a contact position when the occupant contacts the operating element. The operating element includes a contact part that determines a contact of the occupant. Further, the gesture judgment unit selects the specified tier corresponding to a contact position from among the plural tiers, when the occupant contacts the contact part, shifts through and tentatively selects the plurality of menu options included within the specified tier that was selected, in accordance with a gesture by which the contact position is moved while a state of contact with the contact part is maintained, and finalizes a selection of the menu option that is tentatively selected at a point in time that contact of the occupant with respect to the contact part is ended, and implements a function or process of the onboard device corresponding to the menu option whose selection has been finalized.

According to the present invention, a specified tier (e.g., an upper-level layer, a middle-level layer, a lower-level layer) is selected by contact with the contact part. Further, the plurality of menu options included within the selected specified tier can be shifted through and tentatively selected, in accordance with a gesture by which the contact position is moved while the state of contact with the contact part is maintained. Furthermore, when contact of the occupant with respect to the contact part is ended, selection of the menu option that is tentatively selected at that time is finalized, and a function or process of the onboard device is implemented corresponding to the menu option whose selection has been finalized.

Accordingly, with a "touch, move, and detach" series of operations, which is performed only one time, selection of a tier, tentative selection of a menu option, and finalizing the selection of the menu option are enabled. Consequently, selection of tiers and menu options is facilitated, and the operation time can be shortened. Additionally, along with shortening the operation time, driver distraction can be prevented.

The contact part may be divided and arranged sequentially at least into number of areas corresponding to number of tiers that are capable of being displayed on the display unit from among the plural tiers, and the gesture judgment unit continues to shift through the plurality of menu options included within the specified tier until the occupant comes out of contact with the contact part. Consequently, for example, even in the case that an association is established between the plural tiers and the areas where contact is started, and each of the areas are arranged sequentially, as long as the state of contact with the contact part is maintained, the tentatively selected tier is not switched to. Therefore, by increasing the degree of freedom of the gesture in relation to the tiers during tentative selection thereof, the operation time can be shortened, and driver distraction can be reduced.

In the case that the operating element is a steering switch that is disposed on a steering handle of the vehicle, the contact part may be divided and arranged on an outer peripheral side of the steering switch at least into number of areas corresponding to the number of the tiers, and the display unit may display a design corresponding to a shape of the steering switch together with displaying the plurality of menu options included respectively within the plural tiers alongside one another around periphery of the design or inside of the design, or together with displaying the plurality of menu options included within the specified tier when the occupant contacts the steering switch. Further, the plurality of menu options are capable of being shifted through by a moving gesture while the occupant touches the contact part along the outer peripheral side of the steering switch.

Consequently, even if the operating element is provided on the steering switch, a design corresponding to the shape of the steering switch is displayed on the display unit, and the tiered menu options are displayed around the periphery of the design. Therefore, the operations can easily be understood by the occupant, and the occurrence of driver distraction can be reduced.

The display unit may allocate the areas that display the plurality of menu options to each of the tiers and at each of respective predetermined angles around a central vicinity of the design, and the gesture judgment unit may select the tier corresponding to the contact position and the areas that display the plurality of menu options.

Accordingly, plural menu options for each of the tiers are displayed around the periphery of the design corresponding to the shape of the steering switch and the contact position of the contact part. Therefore, the area that has been touched and the tier that has been selected can easily be comprehended by the occupant, and thus, the operation time can be shortened, and driver distraction can be reduced.

At the time that the gesture is judged by the gesture judgment unit, the display unit may be made to shift through the plurality of menu options following the movement of the gesture around the periphery of the design. Together therewith, in a case that the tiers comprise tiers made up from menu options of information in form of character strings, a display position of the tier corresponding to the menu options may be set by the display unit on a left side or a right side with respect to the design as viewed from perspective of the occupant. In the event that the menu options comprising information in the form of character strings are shifted through along the periphery of the design, by the arrangement thereof being on the left side or the right side with respect to the design, the display area can be minimized.

The contact part may be divided into areas in at least three directions from among upper, lower, left, and right directions as viewed from the perspective of the occupant, and the display unit may be of a rectangular shape with a longitudinal direction thereof lying horizontally as viewed from the perspective of the occupant, and the display unit may display the plurality of menu options for each of the tiers around the periphery of the design, and three tiers at least in the three directions with respect to the design. In this case, the plurality of menu options included in a highest ranking first tier from among the three tiers may be arranged and displayed in an upper position of the upper, lower, left and right positions, the plurality of menu options included in a next highest ranking second tier from among the three tiers may be arranged and displayed in a lower position of the upper, lower, left and right positions, and the plurality of menu options included in a lowest ranking third tier from among the three tiers may be arranged and displayed in a left or right position of the upper, lower, left and right positions.

In the event that, as the menu options for the lowermost third tier, for example, character strings indicative of detailed information, are displayed, the character strings are arranged on the left side or the right side of the design, whereby the display unit can be reduced in size, together with enabling the information to be seen easily. Furthermore, by arranging the highest-level first tier on an upper side of the design, an intuitive operation is made possible, thus leading to a reduction in driver distraction.

The contact part may include notches at each of respective movement amounts, which shift through the plurality of menu options when the gesture made up from a circular movement is made. By this feature, since the corresponding notches make up the steering switch, the user can comprehend the movement amount at the time that the gesture is made.

The gesture judgment unit may determine a physical rotating operation of the steering switch as the gesture. By this feature, since the steering switch actually is rotated, the user can easily recognize the amount of rotation, and the amount of rotation and shifting through the menu options can easily be linked in association with one another. Consequently, operability can be enhanced.

### Brief Description of Drawings

FIG. 1 is a schematic block diagram of a vehicle in which there is mounted a vehicle display apparatus (hereinafter also referred to as a "display apparatus") according to an embodiment of the present invention;
FIG. 2 is a view showing in simplified form components that are provided in the interior of the vehicle;
FIG. 3 is an external perspective view of a steering switch according to the present embodiment;
FIG. 4 is an exploded perspective view of parts of the steering switch according to the present embodiment;
FIG. 5 is a cross sectional view of the steering switch with the internal structure thereof partially omitted from illustration;
FIG. 6 is a cross sectional view showing a condition in which the steering switch is touched by a finger of a user (driver) in FIG. 5;
FIG. 7 is a view showing, in the present embodiment, an example of a condition in which left and right side images are displayed on a display panel;
FIG. 8 is a flowchart of a sequence of operations performed by the user (driver) when operating an audio device in the present embodiment;
FIG. 9 is a view showing, in the present embodiment, a basic screen displayed on the display panel when operating the audio device, in a condition in which the audio device is selected as an operation target device and an AM broadcast is selected as a sound source, together with displays showing operations performed with respect to each of upper, lower, left, and right parts of the steering switch, and screens that are displayed additionally in response to each of such operations;
FIG. 10 is a view showing, in the present embodiment, a basic screen displayed on the display panel when operating the audio device, in a condition in which the audio device is selected as an operation target device and a hard disk drive (HDD) is selected as a sound source, together with displays showing operations performed with respect to each of upper, lower, left, and right parts of the steering switch, and screens that are displayed additionally in response to each of such operations;
FIG. 11 is a view showing a hierarchical or tiered structure in relation to operations of the audio device in the present embodiment, as shown in association with parts of the steering switch;
FIG. 12 is a view showing in simplified form a correspondence relationship between respective display areas on the display panel and respective tiers of FIG. 11;
FIG. 13 is a view showing a hierarchical or tiered structure in relation to operations of a camera system in the present embodiment, as shown in association with parts of the steering switch;
FIG. 14 is a view showing in simplified form a correspondence relationship between respective display areas on the display panel and respective tiers of FIG. 13, together with showing in simplified form an exemplary display of a view angle in the case that the target camera is a side camera, according to the present embodiment;
FIG. 15 is a view showing in simplified form a correspondence relationship between respective display areas on the display panel and respective tiers of FIG. 13, together with showing in simplified form an exemplary display of a guidance pattern in the case that the target camera is a side camera, according to the present embodiment;
FIG. 16 is a view showing in simplified form a correspondence relationship between respective display areas on the display panel and respective tiers of FIG. 13, together with showing in simplified form an exemplary display of a view angle in the case that the target camera is a rear camera, according to the present embodiment;
FIG. 17 is a view showing in simplified form a correspondence relationship between respective display areas on the display panel and respective tiers of FIG. 13, together with showing in simplified form an exemplary display of a guidance pattern in the case that the target camera is a rear camera, according to the present embodiment;
FIG. 18 is a view showing, in the present embodiment, operations for a case in which the audio device is selected as an operation target device;
FIG. 19 is a view showing, in the present embodiment, operations for a case in which the camera system is selected as an operation target device;
FIG. 20 is a first flowchart of general controls performed by the display apparatus according to the present embodiment;
FIG. 21 is a second flowchart of general controls performed by the display apparatus according to the present embodiment;
FIG. 22 is a perspective view of a steering switch according to a first modification;
FIG. 23 is an external front view of a steering handle on which the steering switch according to a second modification is arranged;
FIG. 24 is a cross sectional view taken along line A-A of FIG. 23; and
FIG. 25 is an external front view of a steering handle on which the steering switch is arranged according to a third modification.

### Description of Embodiments

### A. Present Embodiment

### 1. Configuration

### [1-1. Overall Configuration of Vehicle 10]

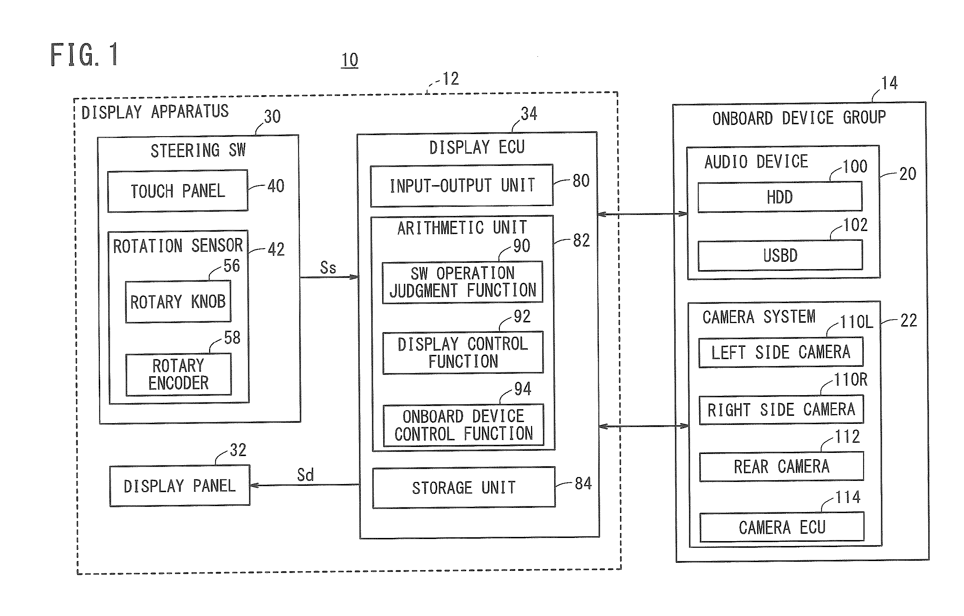

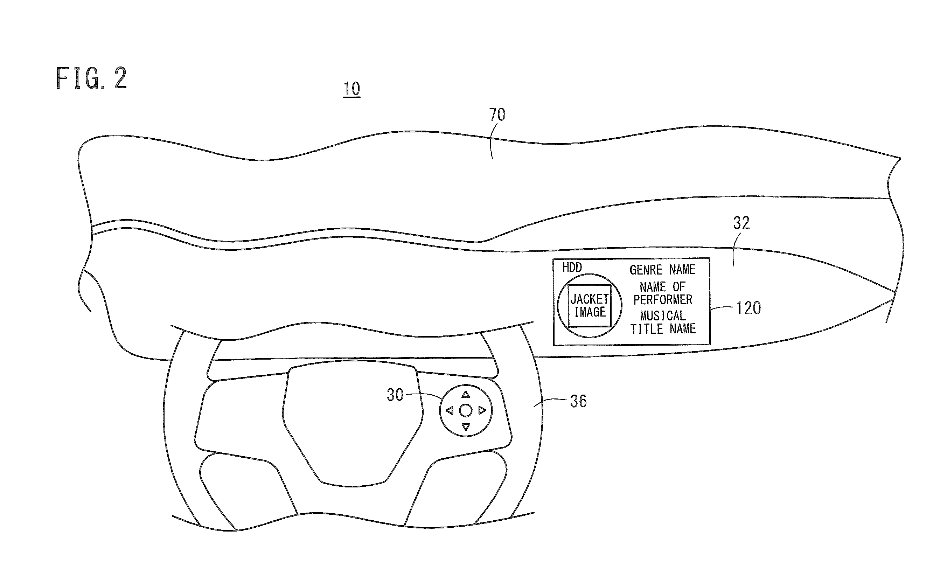

FIG. 1 is a schematic block diagram of a vehicle 10 in which there is mounted a vehicle display apparatus 12 (hereinafter referred to as a "display apparatus 12") according to an embodiment of the present invention. FIG. 2 is a view showing in simplified form components that are provided in the interior of the vehicle 10. The vehicle 10 includes an onboard device group 14 in addition to the vehicle display apparatus 12. In the onboard device group 14, there are included an audio device 20 and a camera system 22. The illustrated vehicle 10 is a left-hand steering type of vehicle.

### [1-2. Vehicle Display Apparatus 12]

### (1-2-1. Overall Configuration of Vehicle Display Apparatus 12)

The display apparatus 12 includes a steering switch 30 (hereinafter also referred to as a "switch 30"), a display panel 32, and a display electronic control unit 34 (hereinafter referred to as a "display ECU 34").

### (1-2-2. Steering Switch 30)

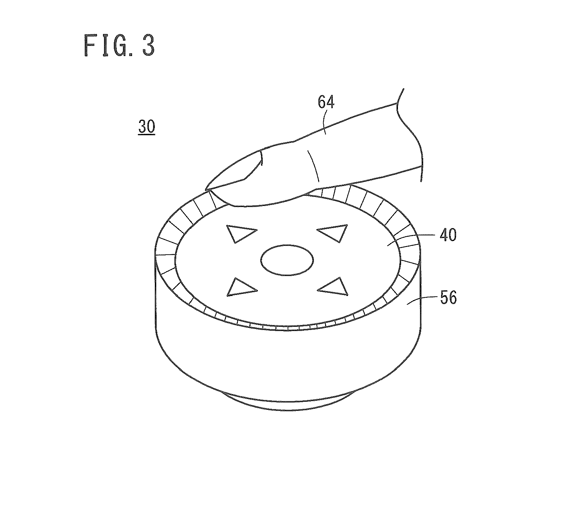

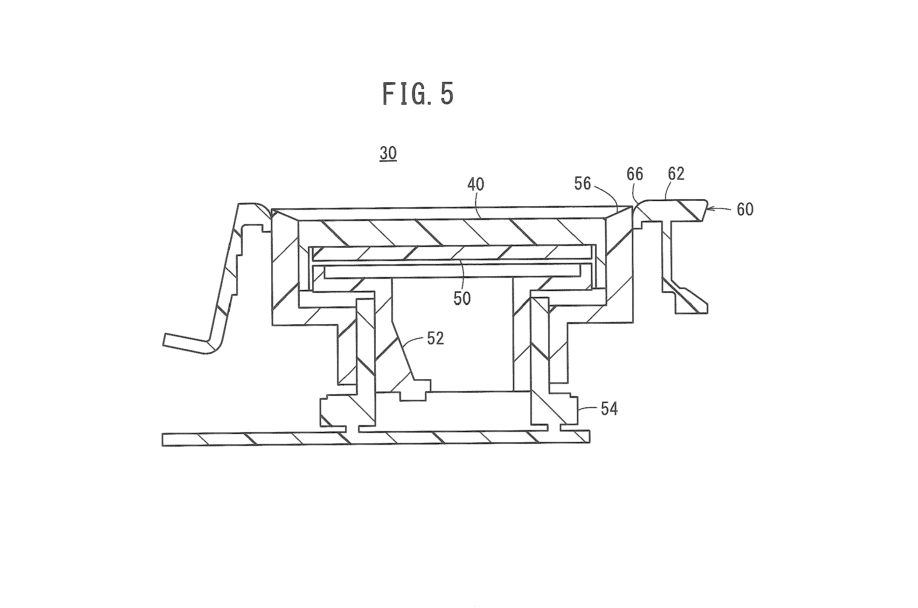

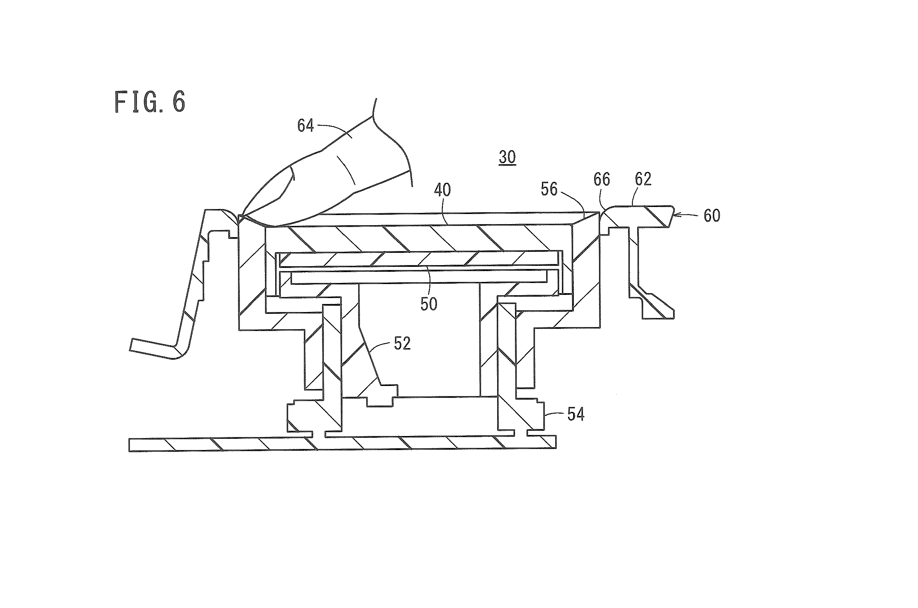

FIG. 3 is an external perspective view of the steering switch 30. FIG. 4 is an exploded perspective view of parts of the steering switch 30. FIG. 5 is a cross sectional view of the steering switch 30 with the internal structure thereof partially omitted from illustration. FIG. 6 is a cross sectional view showing a condition in which the steering switch 30 is touched by a finger 64 of a user (driver) in FIG. 5.

As shown in FIG. 2, the switch 30 is disposed on a steering handle 36 and can be operated by the finger 64 of the user. As shown in FIG. 1, the switch 30 includes a touch panel 40, which is used to detect an initial contact position and a linear motion, and a rotation sensor 42 that serves as a circular motion detecting means. The touch panel 40 is an electrostatic capacitive type or a resistive film type of touch panel, which detects a movement (gesture) of the user's finger 64.

As shown in FIGS. 4 and 5, the touch panel 40 is disposed on a touch panel mount 50. Further, the touch panel mount 50 is fixed to a slider 52. The slider 52 is fixed to a main mount 54. Between the slider 52 and the main mount 54, a rotary knob 56 (hereinafter also referred to as a "knob 56") is arranged rotatably. The amount of rotation (rotational angle) of the rotary knob 56 is detected by a rotary encoder 58 (see FIG. 1), and is output to the display ECU 34. The knob 56 and the rotary encoder 58 collectively constitute the rotation sensor 42. A casing 60 is arranged around the periphery of the rotary knob 56.

As shown in FIG. 6, a position (height) of an upper surface 62 of the casing 60 is disposed at a position such that, when the user's finger 64 touches the upper surface 62, the finger 64 does not touch or come into contact with the touch panel 40 and the rotary knob 56. Further, the cross section of the rotary knob 56 is of a curved structure with a difference in height, so that when an inner surface 66 of the casing 60 is touched while the finger 64 touches the touch panel 40, the finger 64 also touches the rotary knob 56.

### (1-2-3. Display Panel 32)

As shown in FIG. 2, the display panel 32 is disposed inside of an instrument panel 70, and various displays are carried out thereon based on an output signal (display signal Sd) from the display ECU 34. The display panel 32 of the present embodiment has a comparatively long dimension in the lateral direction of the vehicle (e.g., the width thereof is substantially the same as the width of the driver's seat). Therefore, on the display panel 32, a comparatively large number of display items can be displayed simultaneously.

### (1-2-4. Display ECU 34)

The display ECU 34 controls the onboard device group 14 and the display panel 32 based on output signals (switching signals Ss) from the steering switch 30. As shown in FIG. 1, the display ECU 34 includes an input-output unit 80, an arithmetic unit 82, and a storage unit 84.

The input-output unit 80 is used to send and receive signals between the onboard device group 14, the steering switch 30, and the display panel 32.

The arithmetic unit 82 serves to implement various controls performed by the display apparatus 12, and includes a switch operation judgment function 90 (hereinafter also referred to as a "SW operation judgment function 90"), a display control function 92, and an onboard device control function 94.

The SW operation judgment function 90 is a function to determine an operation (gesture) of the user (driver) with respect to the steering switch 30. The display control function 92 is a function to control the displays on the display panel 32. The onboard device control function 94 is a function for controlling the respective onboard devices included in the onboard device group 14.

The storage unit 84 stores various programs and data that are used by the arithmetic unit 82.

### [1-3. Devices of the Onboard Device Group 14]

### (1-3-1. Audio Device 20)

The audio device 20 carries out various audio controls. For example, the audio device 20 carries out reception and output of radio broadcasts (including both FM and AM radio broadcasts), along with playback of audio content that is stored in a hard disk drive 100 (hereinafter referred to as an "HDD 100") or in a USB memory (not shown) that is connected to a USB drive (hereinafter referred to as a "USBD 102").

### (1-3-2. Camera System 22)

The camera system 22 is a device for carrying out various processes in relation to images around the periphery of the vehicle 10, and includes a left side camera 110L, a right side camera 110R, a rear camera 112, and a camera electronic control unit 114 (hereinafter referred to as a "camera ECU 114").

With the camera system 22, an image from the left side camera 110L (hereinafter referred to as a "left side image"), an image from the right side camera 110R (hereinafter referred to as a "right side image"), and an image from the rear camera 112 (hereinafter referred to as a "rear image") can be displayed on the display panel 32 via the display ECU 34. This implies that the display panel 32 and the display ECU 34, in addition to the display apparatus 12, are also included as parts of the camera system 22. The display panel 32 may also be controlled directly from the camera system 22 without the intermediary of the display ECU 34. Further, the left and right side images and the rear image may be displayed on another display panel separate from the display panel 32.

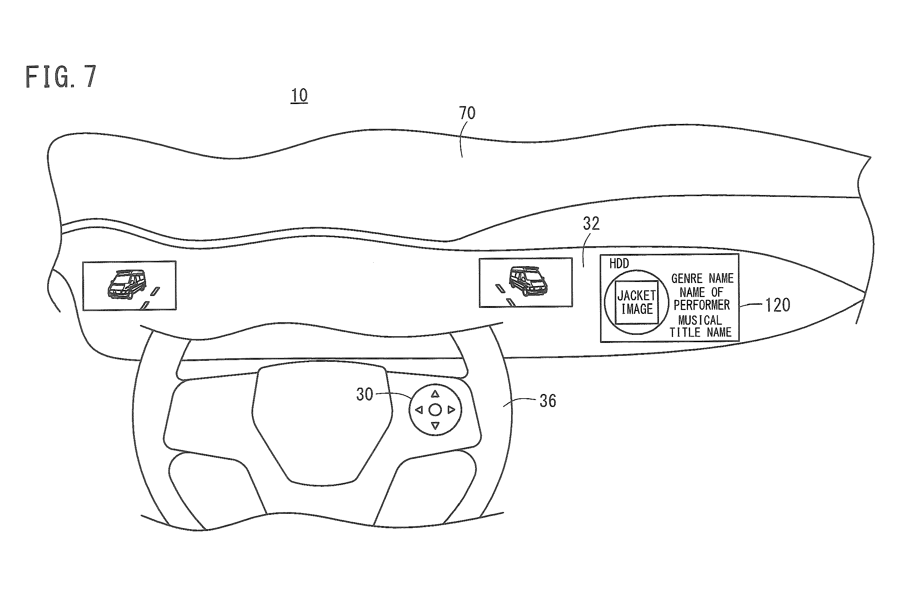

In FIG. 7, an example is shown of a condition in which left and right side images are displayed on the display panel 32. The side images are images with a similar field of view as the images reflected in non-illustrated side mirrors of the vehicle, and for example, are used to recognize the movements and behaviors of other vehicles on the side (and rear) of the vehicle 10.

The rear image mainly is used when the vehicle 10 is traveling in reverse (e.g., during parking). The display position of the rear image, for example, can be at the same position as the right side image shown in FIG. 7.

### 2. Controls Performed in the Display Apparatus 12 (Onboard Device Operating Method)

Next, a description will be given of controls performed in the display apparatus 12. To facilitate understanding, after having described a specific operating method for the audio device 20, reference will be made to specific controls of the display apparatus 12 in relation to the audio device 20. Further, after having described a specific operating method for the camera system 22, reference will be made to specific controls of the display apparatus 12 in relation to the camera system 22. Thereafter, generalized controls concerning the display apparatus 12 will be described.

### [2-1. Controls in Relation to the Audio Device 20]

### (2-1-1. Operation Sequence and Associated Controls of the Audio Device 20)

FIG. 8 is a flowchart of a sequence of operations performed by the user (driver) when operating the audio device 20. On the left side of respective steps S1 through S9, displays are shown in simplified form of operations of the steering switch 30.

A case will be described in which, from an initial condition in which a program Pal-2 that is broadcast by an AM broadcasting station Xa1 has been selected at startup, a musical title Th3-3 in an album Ah3 from among plural albums Ah1-Ah10 that are stored in the HDD 100 is selected and played back.

When the audio device 20 is operated, it is first necessary for an onboard device operation target (referred to below as an "operation target device" or a "target device") to be set in the audio device 20. Details concerning setting or a selection method for the operation target device will be described later.

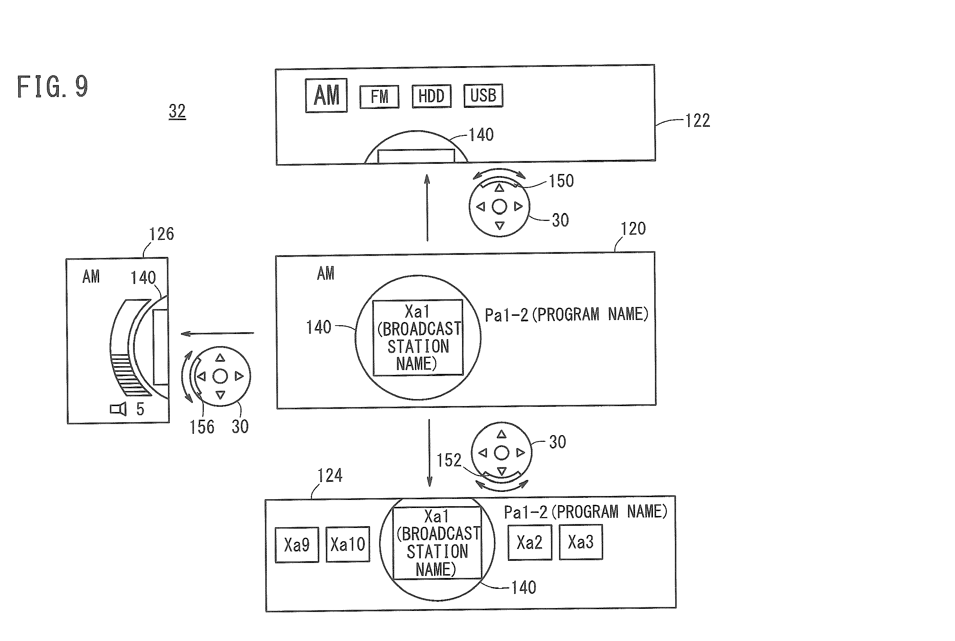

FIG. 9 is a view showing an example of a display screen (hereinafter referred to as a "basic screen 120") of the display panel 32 when operating the audio device 20, in a condition in which the audio device 20 is selected as an operation target device and an AM broadcast is selected as a sound source, together with displays showing operations performed with respect to each of upper, lower, left, and right parts of the steering switch 30, and examples of screens (hereinafter referred to as an "upper side screen 122", a "center screen 124", and a "left side screen 126") that are displayed additionally responsive to each of such operations.

In FIG. 9, although the basic screen 120 and the upper side screen 122 are shown separately from each other, in actuality, the upper side screen 122 corresponds to a portion of the basic screen 120. For example, an icon 140 in the basic screen 120, and the icon 140 in the upper side screen 122 are displayed at the same position on the display panel 32. The positional relationships between the basic screen 120, the center screen 124, and the left side screen 126 are of the same character.

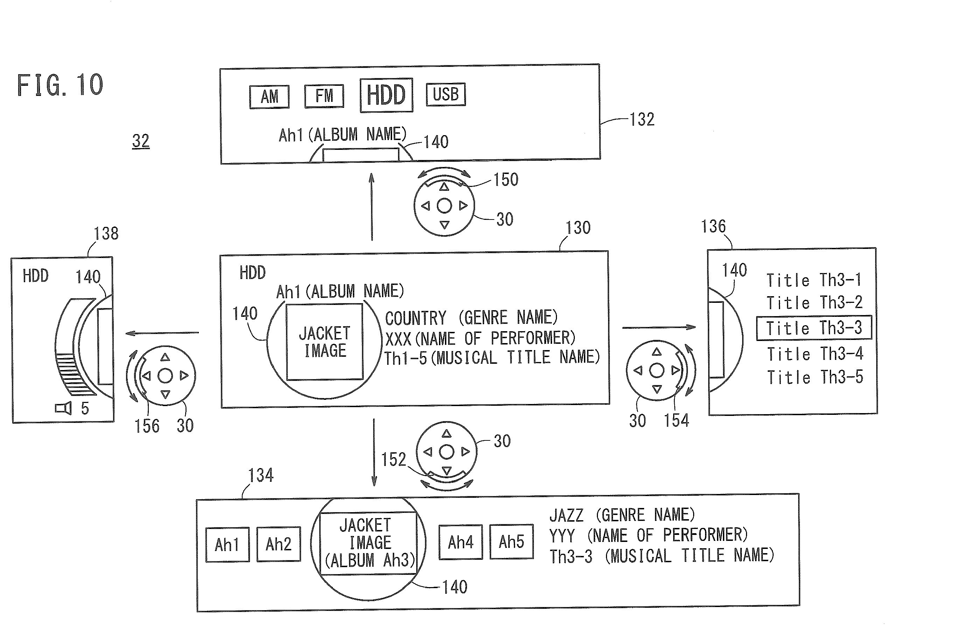

FIG. 10 is a view showing an example of a display screen (hereinafter referred to as a "basic screen 130") of the display panel 32 when operating the audio device 20, in a condition in which the audio device 20 is selected as an operation target device and the HDD 100 is selected as a sound source, together with displays showing operations performed with respect to each of upper, lower, left, and right parts of the steering switch 30, and examples of screens (hereinafter referred to as an "upper side screen 132", a "center screen 134", a "right side screen 136", and a "left side screen 138") that are displayed additionally responsive to each of such operations.

In FIG. 10, although the basic screen 130 and the upper side screen 132 are shown separately from each other, in actuality, the upper side screen 132 corresponds to a portion of the basic screen 130. For example, the icon 140 in the basic screen 130, and the icon 140 in the upper side screen 132 are displayed at the same position on the display panel 32. The positional relationships between the basic screen 130, the center screen 134, the right side screen 136, and the left side screen 138 are of the same character.

Before the user starts to operate the switch 30, for example, the basic screen 120 shown in FIG. 9 is displayed as an initial screen on the display panel 32. On the basic screen 120, the broadcast station (in this case, the station Xa1) and the program name (in this case, the program Pa1-2) that were selected at the time of startup are displayed. Additionally, on the basic screen 120, there is included a design display (hereinafter referred to as a "switch icon 140" or an "icon 140"), which is of the same circular shape as the shape of the front face of the switch 30. The icon 140 represents the steering switch 30. Insofar as the steering switch 30 is capable of being displayed graphically, shapes apart from those shown in FIG. 9 may be used.

Moreover, in the case that an energy-saving mode is applied in the display apparatus 12, without continuously displaying the basic screen 120 on the display panel 32, the basic screen 120 may be displayed when the user touches any portion of the switch 30.

In a condition in which the basic screen 120 is displayed, the finger 64 of the user is placed in contact with an upper side part 150 of the switch 30 (step S1 of FIG. 8). The display ECU 34 (SW operation judgment function 90) detects the aforementioned contact through the touch panel 40. In addition, the display ECU 34 (display control function 92) displays the upper side screen 122, including a display of the multiple sound sources (or a highest-level layer or a first option group), which are capable of being selected, on an upper side of the icon 140.

As the sound sources, there can be cited, for example, an AM broadcast, an FM broadcast, the HDD 100, and a USB memory. Alternatively, in the case that the audio device 20 includes a non-illustrated compact disk drive (CDD), the sound source can also be a compact disk (CD) that is inserted in the CDD. Alternatively, apart from an AM broadcast and an FM broadcast, a different type of radio broadcast (e.g., an XM radio broadcast) can be used as the sound source.

In the present case, since the AM broadcast has been selected as the sound source at the time of startup, in the upper side screen 122, the letters "AM" are displayed in an emphasized manner (as an enlarged display).

In the case that the sound source is switch from the AM broadcast to the HDD 100, after the user's finger 64 has been placed in contact with the upper side part 150 of the switch 30 (step S1), in a state in which the finger 64 remains in contact with the switch 30, the finger 64 makes a circular motion along the outer periphery of the switch 30, whereupon the rotary knob 56 is rotated (step S2). The display ECU 34 (SW operation judgment function 90) detects the aforementioned rotation (circular motion) through the rotary encoder 58. In addition, on the upper side screen 122, the display ECU 34 (display control function 92) sequentially switches through the sound source options. More specifically, at this time, the sound sources (i.e., sound sources during tentative selection thereof) which are being selected provisionally or tentatively are displayed in a relatively larger size on the upper side screen 122.

Moreover, at this time, since the condition is one in which the selection is not yet finalized (i.e., a state of tentative selection), the display ECU 34 (onboard device control function 94) does not actually implement switching of the sound source with respect to the audio device 20.

In a condition in which the HDD 100 is tentatively selected, the user's finger 64 separates away from the switch 30 (step S3). The display ECU 34 (SW operation judgment function 90) detects that the finger 64 has separated away from the switch 30 (out of contact) through the touch panel 40. In addition, the display ECU 34 (onboard device control function 94) finalizes the selection of the sound source, and with respect to the audio device 20, switches the sound source from the AM broadcast to the HDD 100. Further, the display ECU 34 (display control function 92) stops to display the upper side screen 122 of FIG. 9, together with switching the basic screen 120 of FIG. 9 to the basic screen 130 of FIG. 10.

The selected content (initial setting) of the HDD 100 at the time of startup is the musical title Th1-5 in the album Ah1 from among the plurality of albums Ah1 through Ah10. In this case, at the time that the sound source is switched from the AM broadcast to the HDD 100, the audio device 20 starts playback of the musical title Th1-5.

In this manner, when the sound source is switched from the AM broadcast to the HDD 100, the basic screen 130 of FIG. 10 is displayed. On the basic screen 130, the album name (album Ah1), the genre name (e.g., country music), the name of the performer (shown as "XXX" in FIG. 10), and the music title name (title Th1-5), which were selected at the time of startup, are displayed. Additionally, similar to the basic screen 120 of FIG. 9, on the basic screen 130, there is included a design display (switch icon 140), which is of the same circular shape as the shape of the front face of the switch 30. The icon 140 represents the steering switch 30. In the center of the icon 140, an image of a face of the jacket of the album (album Ah1) that is currently under selection is displayed.

Next, the user selects the album Ah3 from among the albums Ah1 through Ah10. More specifically, in a condition in which the basic screen 130 is displayed showing that the HDD 100 is selected as the sound source, the finger 64 of the user is placed in contact with a lower side part 152 of the switch 30 (step S4 of FIG. 8). The display ECU 34 (SW operation judgment function 90) detects the aforementioned contact through the touch panel 40. In addition, the display ECU 34 (display control function 92) displays the center screen 134, including the multiple albums Ah1 through Ah10 (or a middle-level layer or a second option group) that are capable of being selected, within and around the periphery of the icon 140.

In the present case, since the album Ah1 is selected as the album at the time of startup, a representation of the album Ah1 (e.g., an image of the jacket face of the album I) is displayed in the center of the icon 140.

In the case that the album Ah1 is switched to the album Ah3, after the user's finger 64 has been placed in contact with the lower side part 152 of the switch 30 (step S4), in a state in which the finger 64 remains in contact with the switch 30, the finger 64 makes a circular motion along the outer periphery of the switch 30, whereupon the rotary knob 56 is rotated (step S5). The display ECU 34 (SW operation judgment function 90) detects the aforementioned rotation (circular motion) through the rotary encoder 58. In addition, the display ECU 34 (display control function 92) sequentially switches through the options for the albums Ah1 through Ah10.

At this time, the display ECU 34 (display control function 92) displays in a relatively large size in the icon 140 a representation of the album (the album under tentative selection) that is currently being selected provisionally or tentatively at that point in time. More specifically, each time that the option for the albums Ah1 through Ah10 is switched, representations showing each of the albums are scrolled through (in the case that, depending on the relationship between the display areas, all of the albums cannot be displayed, only a portion of the albums is displayed).

Moreover, at this time, since the condition is one in which the selection is not yet finalized (i.e., a state of tentative selection), the display ECU 34 (onboard device control function 94) does not actually implement switching of the album with respect to the audio device 20.

In a condition in which the album Ah3 is tentatively selected, the user's finger 64 separates away from the switch 30 (step S6). The display ECU 34 (SW operation judgment function 90) detects that the finger 64 has separated away from the switch 30 (out of contact) through the touch panel 40. In addition, the display ECU 34 (onboard device control function 94) finalizes the selection of the album, and with respect to the audio device 20, switches the album under selection from the album Ah1 to the album Ah3. Upon receipt of this information, the audio device 20 starts playback of the musical title (title Th3-1) that is recorded first in the album Ah3. Further, the display ECU 34 (display control function 92) stops to display the center screen 134, and displays on the basic screen 130 the name of the album Ah3, the genre name, the name of the performer, and the song title of the musical title (title Th3-1) that is recorded first in the album Ah3 (note that in FIG. 10, a condition in which the title Th3-1 is selected is not shown).

Next, the user selects the musical title Th3-3 from among the musical titles Th3-1 through Th3-10 that are included in the album Ah3. More specifically, in a condition in which the basic screen 130 is displayed, the finger 64 of the user is placed in contact with a right side part 154 of the switch 30 (step S7 of FIG. 8). The display ECU 34 (SW operation judgment function 90) detects the aforementioned contact through the touch panel 40. In addition, the display ECU 34 (display control function 92) displays the right side screen 136, including the plural musical titles Th3-1 through Th3-5 (or a lower-level layer or third option group) that are capable of being selected, on the right side of the icon 140.

In this case, since after the album Ah3 has been selected, playback of the musical title Th3-1 is started, the song title of the musical title Th3-1 is displayed in the middle of the right side of the icon 140.

In FIG. 10, the respective musical titles are indicated by the symbols Th3-1 through Th3-5. However, such symbols are used to indicate the song titles in a simplified form. Therefore, in practice, at the locations where the titles Th3-1 through Th3-5 are listed in FIG. 10, the actual song titles of each of the songs are displayed. Generally, although the song titles are displayed by character strings which are comparatively longer than the names of the sound source or the album names, in the present embodiment, the song titles are displayed on the right side of the icon 140. Therefore, on the display panel 32, good balance is achieved for the display area of the basic screen 130, and the display area can be made smaller in size.

For switching the musical title Th3-1 to the title Th3-3, after the user's finger 64 has been placed in contact with the right side part 154 of the switch 30 (step S7), in a state in which the finger 64 remains in contact with the switch 30, the finger 64 makes a circular motion along the outer periphery of the switch 30, whereupon the rotary knob 56 is rotated (step S8). The display ECU 34 (SW operation judgment function 90) detects the aforementioned rotation (circular motion) through the rotary encoder 58. In addition, the display ECU 34 (display control function 92) sequentially switches through the options for the musical titles Th3-1 through Th3-10.

At this time, the display ECU 34 (display control function 92) displays, with the display colors thereof being displayed in reverse, the song title (the song currently under tentative selection) that is currently being selected provisionally or tentatively at that point in time. More specifically, each time that the options for the musical titles Th3-1 to Th3-10 are switched, the respective song titles are scrolled through (in the case that, depending on the relationship between the display areas, all of the song titles cannot be displayed, only a portion of the song titles is displayed).

Moreover, at this time, since the condition is one in which the selection is not yet finalized (i.e., a state of tentative selection), the display ECU 34 (onboard device control function 94) does not actually implement switching of the musical title with respect to the audio device 20.

In a condition in which the musical title Th3-3 is tentatively selected, the user's finger 64 separates away from the switch 30 (step S9). The display ECU 34 (SW operation judgment function 90) detects that the finger 64 has separated away from the switch 30 (out of contact) through the touch panel 40. In addition, the display ECU 34 (onboard device control function 94) finalizes the selection of the musical title Th3-3, and with respect to the audio device 20, switches the musical title currently under selection from the title Th3-1 to the title Th3-3. Upon receipt of this information, the audio device 20 starts playback of the musical title Th3-3. Further, the display ECU 34 (display control function 92) stops to display the right side screen 136, and displays on the basic screen 130 the name of the album Ah3, the genre name, the name of the performer, and the song title of the musical title (title Th3-3) that is under selection.

The above sequence of operations is but one example, and as necessary, the user can perform the selection of the sound source (steps S1 to S3), the selection of the album (steps S4 to S6), and the selection of the musical title (steps S7 to S9) separately. For example, if the user wishes to select only the song title, only steps S7 through S9 may be carried out. Stated otherwise, the musical title can be switched without performing the operations of steps S1 through S6. For example, if the user wishes to select only a particular album, only steps S4 through S6 may be carried out. In other words, the album can be switched without performing the operations of steps S1 through S3.

Furthermore, by operating the switch 30, the user can adjust the output volume of the audio device 20. More specifically, at any arbitrary point in time, the finger 64 of the user is placed in contact with a left side part 156 of the switch 30. The display ECU 34 (SW operation judgment function 90) detects the aforementioned contact through the touch panel 40. In addition, the display ECU 34 (display control function 92) displays the left side screen 138 including a scale indicative of the volume level on the left side of the icon 140.

In the case that the volume is to be increased, after the user's finger 64 has been placed in contact with the left side part 156 of the switch 30, in a state in which the finger 64 remains in contact with the switch 30, the finger 64 makes a clockwise circular motion along the outer periphery of the switch 30, whereupon the rotary knob 56 is rotated. The display ECU 34 (SW operation judgment function 90) detects the aforementioned rotation (circular motion) through the rotary encoder 58. In addition, the display ECU 34 (onboard device control function 94) increases the volume with respect to the audio device 20 corresponding to the amount of rotation of the knob 56. Further, the display ECU 34 (display control function 92) increases the scale, which is indicative of the volume level, on the left side screen 138.

In the case that the volume is to be reduced, after the user's finger 64 has been placed in contact with the left side part 156 of the switch 30, in a state in which the finger 64 remains in contact with the switch 30, the finger 64 makes a counterclockwise circular motion along the outer periphery of the switch 30, whereupon the rotary knob 56 is rotated. The display ECU 34 (SW operation judgment function 90) detects the aforementioned rotation (circular motion) through the rotary encoder 58. In addition, the display ECU 34 (onboard device control function 94) decreases the volume with respect to the audio device 20 corresponding to amount of the rotation of the knob 56. Further, the display ECU 34 (display control function 92) decreases the scale, which is indicative of the volume level, on the left side screen 138.

### (2-1-2. Hierarchical Structure in Relation to Operations of the Audio Device 20)

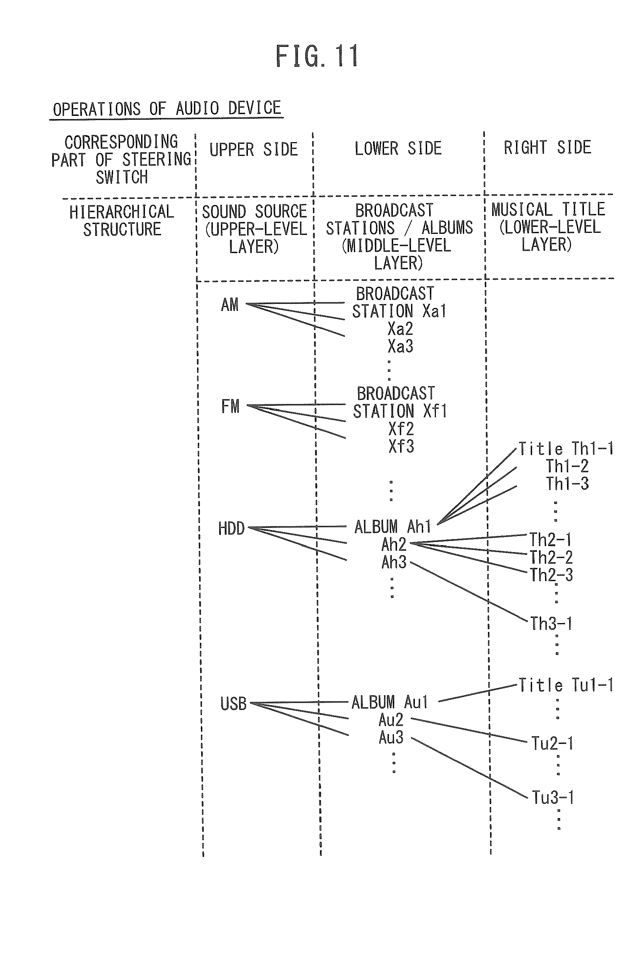

FIG. 11 is a view showing a hierarchical or tiered structure in relation to operations of the audio device 20, as shown in association with parts of the steering switch 30.

As shown in FIG. 11, in the present embodiment, the hierarchical structure in relation to operations of the audio device 20 is divided into an upper-level layer, a middle-level layer, and a lower-level layer.

The upper-level layer is a layer related to the sound sources (first option group), and in the upper level layer, there are included the AM broadcast, the FM broadcast, the HDD 100, and the USB memory. The middle-level layer is a layer related to broadcast stations (second option group) if the sound sources are the AM broadcast and the FM broadcast, and is a layer related to albums (second option group) if the sound sources are the HDD 100 and the USB memory. Accordingly, in the middle-layer level, there are included the AM broadcast stations Xa1, Xa2, Xa3, etc., the FM broadcast stations Xf1, Xf2, Xf3, etc., the albums Ah1, Ah2, Ah3, etc., recorded in the HDD 100, and the albums Au1, Au2, Au3, etc., recorded in the USB memory.

The lower-level layer is a layer related to musical titles (third option group) if the sound sources are the HDD 100 and the USB memory. Accordingly, in the lower-layer level, there are included the musical titles Th1-1, Th1-2, Th1-3, etc., recorded in the HDD 100, and the musical titles Tu1-1, Tu1-2, Tu1-3, etc., recorded in the USB memory. According to the present embodiment, although generally there is not content included in the lower-level layer concerning the AM broadcast and the FM broadcast, if the sound source is a radio (two-way radio) that is capable of playing back stations at given arbitrary timings, the lower-level layer may be a layer related to stations (third option group).

As shown in FIG. 11, in the present embodiment, the sound sources (upper-level layer or first option group) are allocated to the upper side part 150 of the steering switch 30, the broadcast stations and the albums (middle-level layer or second option group) in a tier of a layer below the sound sources are allocated to the lower side part 152 of the switch 30, and the programs and the musical titles (lower-level layer or third option group) in a tier of a layer below the broadcast stations and the albums are allocated to the right side part 154 of the switch 30.

Consequently, for example, in the case that the sound source is already selected, selection of the sound source can be omitted, and selections can be made with respect to the broadcast stations or the albums. Further, for example, in the case that a broadcast station or an album is already selected, selection of the broadcast station or the album can be omitted, and selections can be made with respect to the programs or the musical titles.

Moreover, regarding volume adjustment, since it is not separated into an upper-level layer and a lower-level layer, the volume adjustment feature is not included in the hierarchical structure of FIG. 11.

### (2-1-3. Display Area in Relation to Operations of the Audio Device 20)

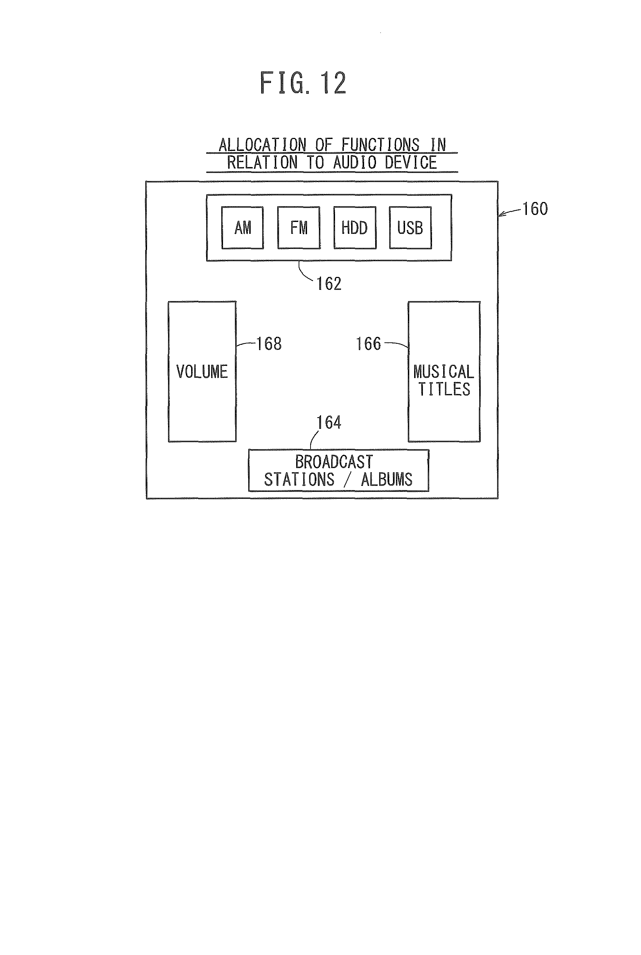

FIG. 12 is a view showing in simplified form a correspondence relationship between respective display areas on the display panel 32 and respective tiers of FIG. 11.

On the display panel 32, an area in which displays are carried out in relation to operations of the audio device 20 is referred to as a "display area 160". The display area 160 is an area in which the basic screens 120, 130 are displayed.

An area (referred to hereinbelow as a "first area 162"), in which the "sound sources" included in the upper-level layer (first option group) are shown, is positioned on an upper side of the display area 160. An area (referred to hereinbelow as a "second area 164"), in which the "BROADCAST STATIONS" and the "ALBUMS" included in the middle-level layer (second option group) are shown, is positioned on a lower side of the display area 160.

An area (referred to hereinbelow as a "third area 166"), in which the "MUSICAL TITLES" included in the lower-level layer (third option group) are shown, is positioned on the right side of the display area 160. An area (referred to hereinbelow as a "fourth area 168"), in which the "VOLUME" that is not included in the hierarchical structure is shown, is positioned on the left side of the display area 160.

The positions in the display area 160 shown in FIG. 12 are indicated by a correspondence relationship with each of the parts (the upper side part 150, the lower side part 152, the right side part 154, and the left side part 156) of the steering switch 30. In this regard, it should be noted that the respective positions of the display area 160 and the respective positions in the basic screens 120, 130 do not correspond exactly with one another.

For example, although the second area 164 (see FIG. 12) in relation to the middle-level layer is arranged on the lower side of the display area 160, the center screen 134 (see FIG. 10) in relation to the same middle-level layer is displayed within and around the periphery of the icon 140, and is not displayed below the icon 140. However, since the center screen 134 is located downwardly with respect to the upper side screen 132, it is possible to substantially grasp that the center screen 134 is arranged on the lower side of the display area 160. Naturally, the content (options in relation to the middle-level layer) that is displayed in the center screen 134 may also be displayed below the icon 140.

### [2-2. Controls in Relation to the Camera System 22]

### (2-2-1. Operation Sequence of the Camera System 22)

Similar to the description made for the audio device 20, according to the present embodiment, plural tiers or option groups, which have a hierarchical relationship, correspond with respective parts (the upper side part 150, the lower side part 152, the right side part 154, and the left side part 156) of the steering switch 30 in the storage unit 84. In addition, after the user's finger 64 has been brought into contact with any portion of the switch 30, by moving the finger 64 in a circular motion and rotating the rotary knob 56, the options (menu options) included in the tiers (option groups) are tentatively selected. Thereafter, when the finger 64 separates away from the touch panel 40 of the switch 30, the selection is finalized, and a function or process corresponding to the selected option is implemented.

### (2-2-2. Hierarchical Structure in Relation to Operations of the Camera System 22)

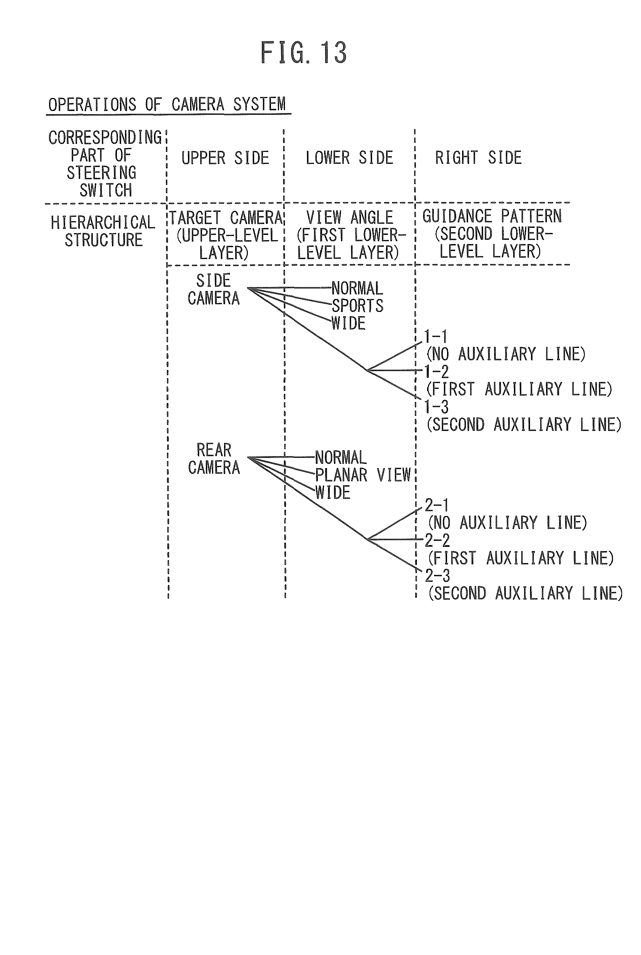

FIG. 13 is a view showing a hierarchical or tiered structure in relation to operations of the camera system 22, as shown in association with parts of the steering switch 30.

As shown in FIG. 13, in the present embodiment, the hierarchical structure in relation to operations of the camera system 22 is divided into an upper-level layer, a first lower-level layer, and a second lower-level layer. Both of the first lower-level layer and the second lower-level layer have a hierarchical relationship with the upper-level layer. However, a hierarchical relationship is not established between the first lower-level layer and the second lower-level layer, and they are mutually independent of one another. Notwithstanding, a relationship may be established in which one of the first lower-level layer and the second lower-level layer is provided as a lower-level layer of the other.

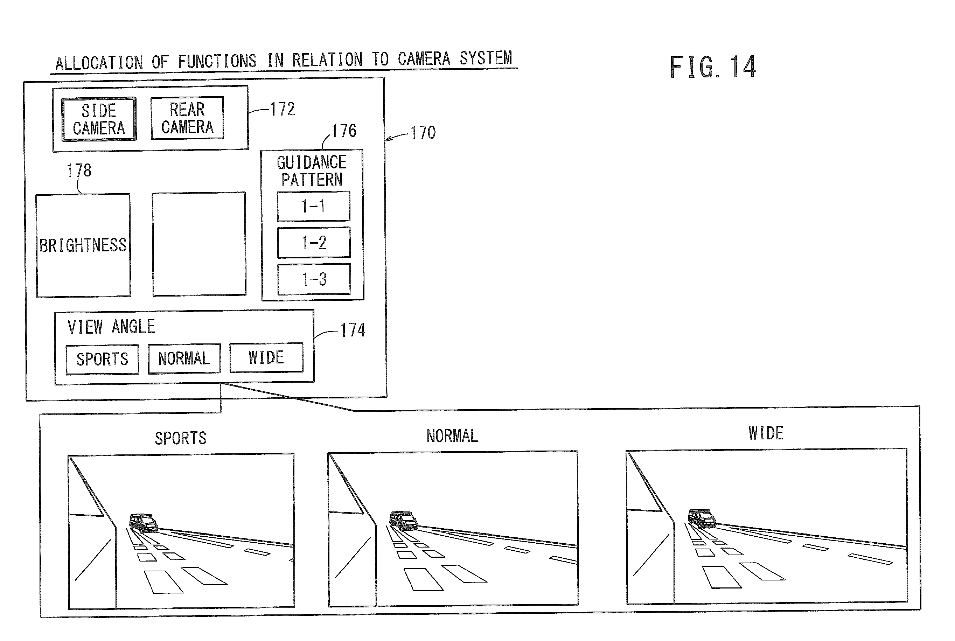

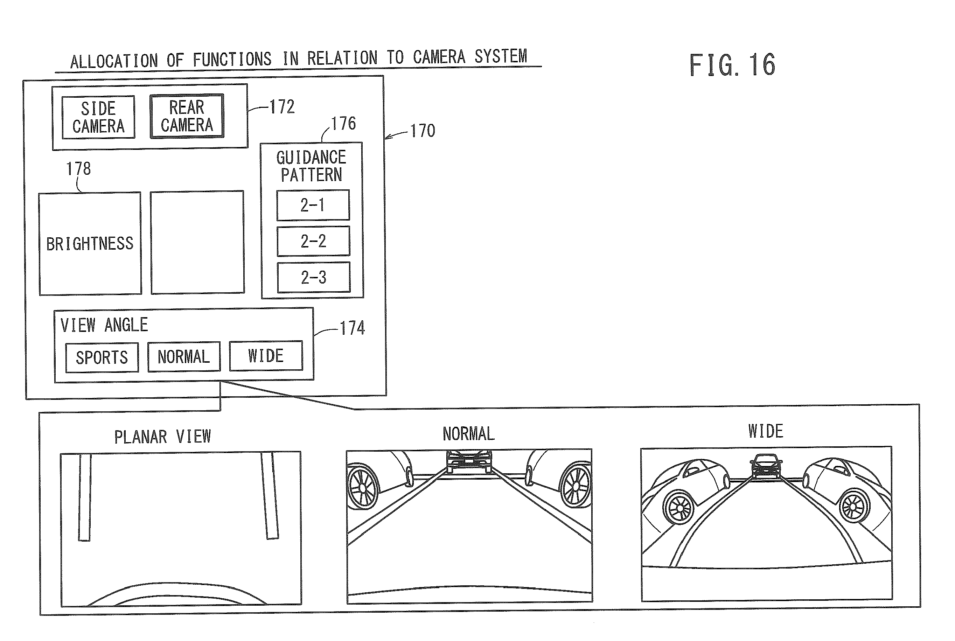

The upper-level layer is a layer related to the target camera (first option group), and in the upper level layer, there are included the side cameras 110L, 110R and the rear camera 112. Among the target cameras, other cameras may be included, such as a non-illustrated front camera or the like. The first lower-level layer is a layer related to the view angle (second option group), and in the first lower-level layer, there are included normal, sports, and wide for the side cameras 110L, 110R, and normal, planar view, and wide for the rear camera 112. Details concerning the view angles will be described later with reference to FIGS. 14 and 16.

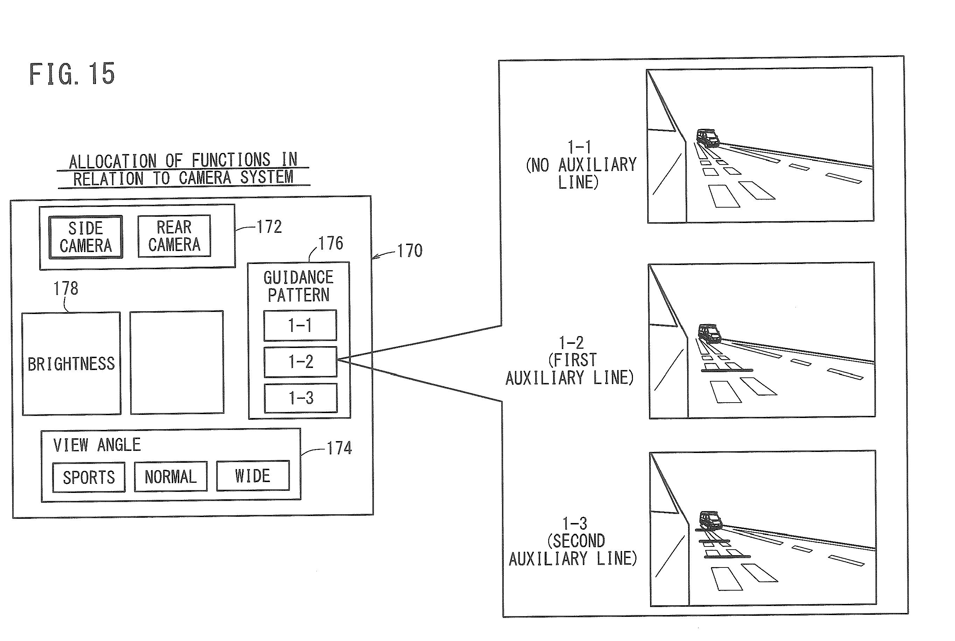

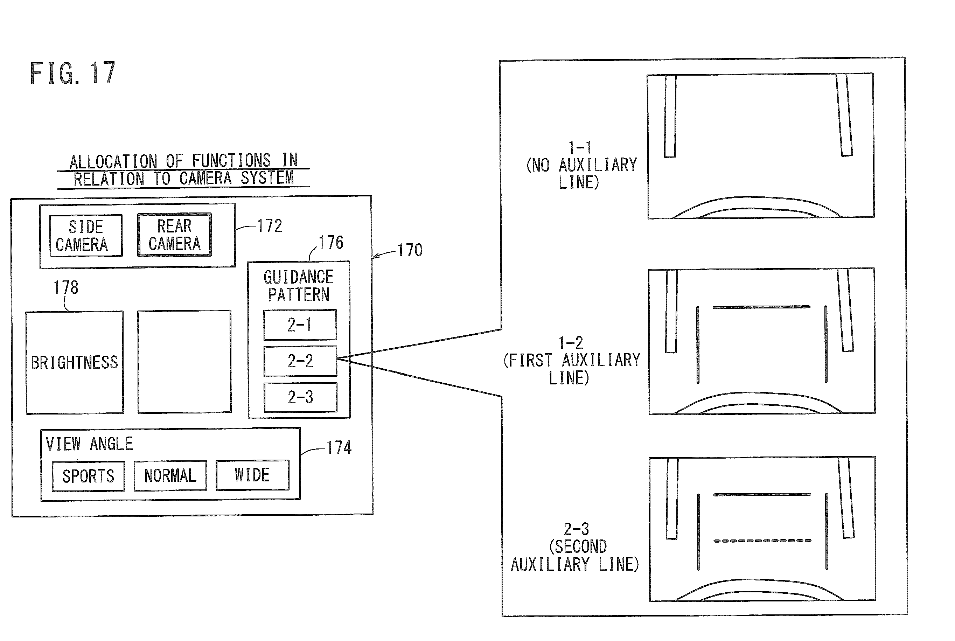

The second lower-level layer is a layer related to a guidance pattern using an auxiliary line (third option group), and in the second lower-level layer there are included guidance patterns 1-1 (no auxiliary line), 1-2 (first auxiliary line), and 1-3 (second auxiliary line) for the side cameras 110L, 110R, and guidance patterns 2-1 (no auxiliary line), 2-2 (first auxiliary line), and 2-3 (second auxiliary line) for the rear camera 112. Details concerning the guidance patterns will be described later with reference to FIGS. 15 and 17.

As shown in FIG. 13, in the present embodiment, the target cameras (upper-level layer or first option group) are allocated to the upper side part 150 of the steering switch 30, view angles (first lower-level layer or second option group) in a tier of a layer below the target cameras are allocated to the lower side part 152 of the switch 30, and the guidance patterns (second lower-level layer or third option group) in a tier of a layer below the target cameras are allocated to the right side part 154 of the switch 30.

Consequently, for example, in the case that the target camera is already selected, selection of the target camera can be omitted, and selections can be made with respect to the view angle or the guidance pattern.

By operating the switch 30, the user can adjust the brightness of the display panel 32. More specifically, at any arbitrary point in time, the finger 64 of the user is placed in contact with a left side part 156 of the switch 30. The display ECU 34 (SW operation judgment function 90) detects the aforementioned contact through the touch panel 40. In addition, the display ECU 34 (display control function 92) displays a left side screen (not shown) including a scale indicative of the brightness on the left side of the icon 140.

In the case that the brightness is to be increased, after the user's finger 64 has been placed in contact with the left side part 156 of the switch 30, in a state in which the finger 64 remains in contact with the switch 30, the finger 64 makes a clockwise circular motion along the outer periphery of the switch 30, whereupon the rotary knob 56 is rotated. The display ECU 34 (SW operation judgment function 90) detects the aforementioned rotation (circular motion) through the rotary encoder 58. In addition, the display ECU 34 (onboard device control function 94) increases the brightness with respect to the display panel 32 corresponding to the amount of rotation of the knob 56. Further, the display ECU 34 (display control function 92) increases the scale, which is indicative of the brightness, on the left side screen 138.

In the case that the brightness is to be reduced, after the user's finger 64 has been placed in contact with the left side part 156 of the switch 30, in a state in which the finger 64 remains in contact with the switch 30, the finger 64 makes a counterclockwise circular motion along the outer periphery of the switch 30, whereupon the rotary knob 56 is rotated. The display ECU 34 (SW operation judgment function 90) detects the aforementioned rotation (circular motion) through the rotary encoder 58. In addition, the display ECU 34 (onboard device control function 94) decreases the brightness with respect to the display panel 32 corresponding to the amount of rotation of the knob 56. Further, the display ECU 34 (display control function 92) decreases the scale, which is indicative of the brightness, on the left side screen 138.

Moreover, regarding the brightness adjustment, since it is not separated into an upper-level layer and a lower-level layer, the brightness adjustment feature is not included in the hierarchical structure of FIG. 13.

### (2-2-3. Display Areas and Exemplary Displays in Relation to Operations of the Camera System 22)

FIG. 14 is a view showing in simplified form a correspondence relationship between respective display areas on the display panel 32 and respective tiers of FIG. 13, together with showing in simplified form an exemplary display of a view angle in the case that the target camera is a side camera. FIG. 15 is a view showing in simplified form a correspondence relationship between respective display areas on the display panel 32 and respective tiers of FIG. 13, together with showing in simplified form an exemplary display of a guidance pattern in the case that the target camera is a side camera.

FIG. 16 is a view showing in simplified form a correspondence relationship between respective display areas on the display panel 32 and respective tiers of FIG. 13, together with showing in simplified form an exemplary display of a view angle in the case that the target camera is a rear camera. FIG. 17 is a view showing in simplified form a correspondence relationship between respective display areas on the display panel 32 and respective tiers of FIG. 13, together with showing in simplified form an exemplary display of a guidance pattern in the case that the target camera is a rear camera.

On the display panel 32, an area in which displays are carried out in relation to operations of the camera system 22 is referred to as a "display area 170". An area (referred to hereinbelow as a "first area 172"), in which the "target cameras" included in the upper-level layer (first option group) are shown, is positioned on an upper side of the display area 170. An area (referred to hereinbelow as a "second area 174"), in which the "view angles" included in the first lower-level layer (second option group) are shown, is positioned on the lower side of the display area 170.

An area (referred to hereinbelow as a "third area 176"), in which the "guidance patterns" included in the second lower-level layer (third option group) are shown, is positioned on the right side of the display area 170. An area (referred to hereinbelow as a "fourth area 178"), in which the "brightness" that is not included in the hierarchical structure is shown, is positioned on the left side of the display area 170.

Concerning the view angle of the side cameras, as shown in FIG. 14, compared to the "normal" view angle, when "sports" is selected, the view angle becomes narrower, and when "wide" is selected, the view angle becomes wider.

Concerning the guidance pattern of the side cameras, as shown in FIG. 15, with the guidance pattern 1-1, no auxiliary line is shown, with the guidance pattern 1-2, one auxiliary line (first auxiliary line) is shown, and with the guidance pattern 1-3, three auxiliary lines (second auxiliary lines) are shown. In FIG. 15, a case in which the view angle is set to "sports" is shown, although similar features apply to the "normal" and "wide" view angles as well.

Concerning the view angle of the rear camera, as shown in FIG. 16, when the view angle is set to "normal", an ordinary rear view image is shown. When the view angle is set to "planar view", the rearward direction of the vehicle 10 is shown in a planar view, and when the view angle is set to "wide", the view angle becomes wider than when set to "normal".

Concerning the guidance pattern of the rear camera, as shown in FIG. 17, with the guidance pattern 2-1, no auxiliary lines are shown, with the guidance pattern 2-2, auxiliary lines of a first pattern (first auxiliary lines) are shown, and with the guidance pattern 2-3, auxiliary lines of a second pattern (second auxiliary lines) are shown. In FIG. 17, a case in which the view angle is set to "planar view" is shown, although similar features apply to the "normal" and "wide" view angles as well.

Similar to the display area 160 of FIG. 12, the positions in the display area 170 shown in FIGS. 14 to 17 are indicated by a correspondence relationship with each of the parts (the upper side part 150, the lower side part 152, the right side part 154, and the left side part 156) of the steering switch 30. Therefore, in the actual display image as well, while it is possible for the first through fourth areas 172, 174, 176, 178 of FIGS. 14 through 17 to be displayed in the basic screens (refer to the basic screens 120, 130 of FIGS. 9 and 10) or to be displayed on the upper side, the lower side, the right side, and the left side of the icon 140, the respective positions of the display area 170 and the respective positions with respect to the basic screens or the icon 140 may not correspond exactly with one another.

Further, concerning the view angles in the second area 174 of FIG. 14, while the options can be indicated by characters ("NORMAL", "SPORTS", and "WIDE") as in FIG. 14, the actual screens (images) as shown in FIG. 14 may also be displayed. The same applies to the view angles in the second area 174 of FIG. 16, and the guidance patterns in the third area 176 of FIGS. 15 and 17.

### [2-3. Selection of Respective Onboard Devices]

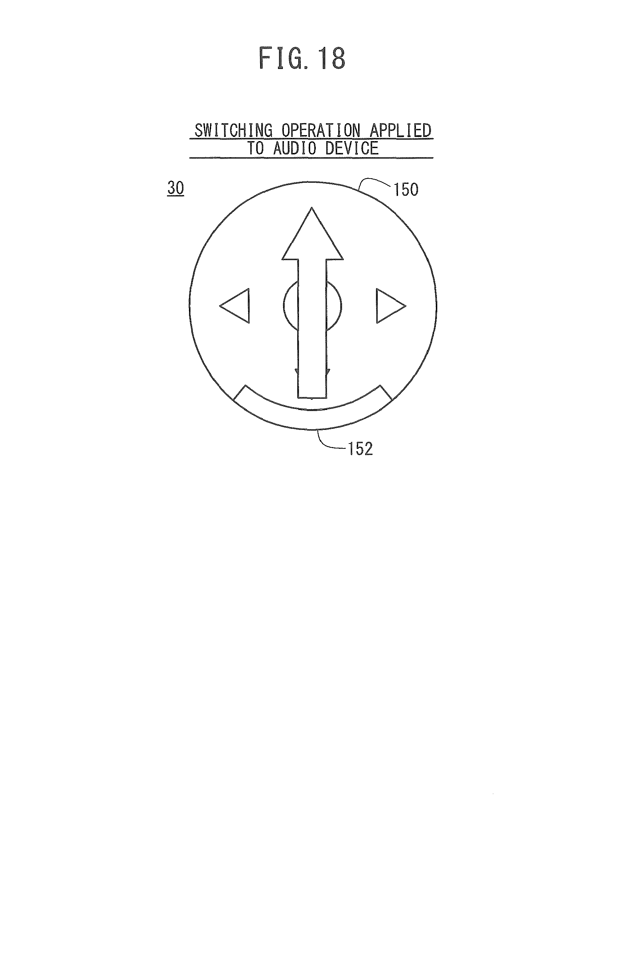

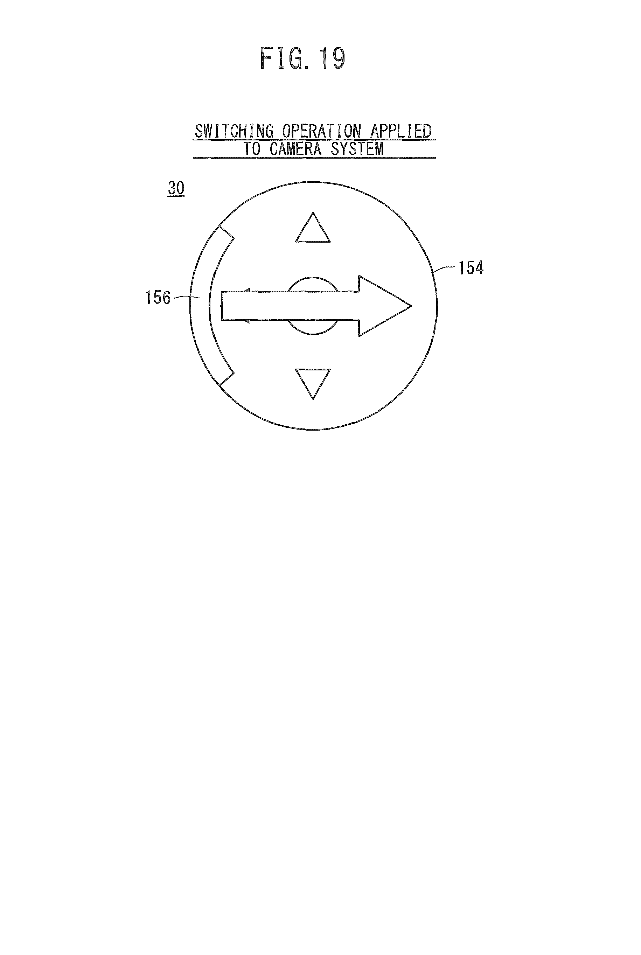

FIG. 18 is a view showing operations for a case in which the audio device 20 is selected as an operation target device, and FIG. 19 is a view showing operations for a case in which the camera system 22 is selected as an operation target device.

As shown in FIG. 18, in the case that the audio device 20 is selected as the operation target device, after the user's finger 64 is brought into contact with the lower side part 152 of the steering switch 30, while remaining in a state of contact, the finger 64 is moved linearly toward the upper side. The display ECU 34 (SW operation judgment function 90) detects the aforementioned contact and linear movement through the touch panel 40. In addition, the display ECU 34 (onboard device control function 94) switches the operation target device to the audio device 20.

As shown in FIG. 19, in the case that the camera system 22 is selected as the operation target device, after the user's finger 64 is brought into contact with the left side part 156 of the steering switch 30, while remaining in a state of contact, the finger 64 is moved linearly toward the right side. The display ECU 34 (SW operation judgment function 90) detects the aforementioned contact and linear movement through the touch panel 40. In addition, the display ECU 34 (onboard device control function 94) switches the operation target device to the camera system 22.

### [2-4. General Controls]

Having given descriptions above in relation to the audio device 20 and the camera system 22, next there will be described below controls of the display apparatus 12 that are applicable to generalized onboard devices.

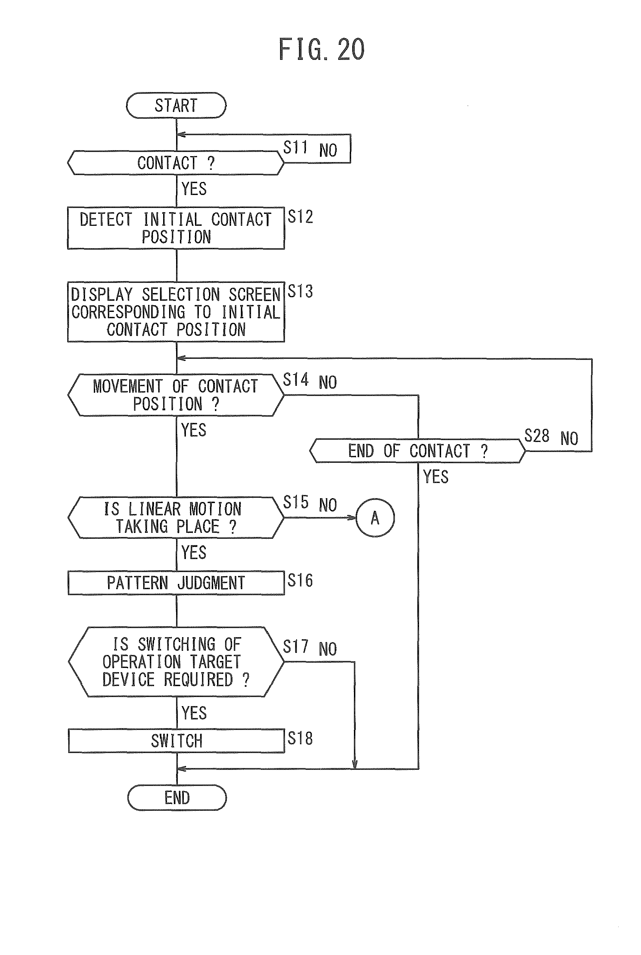

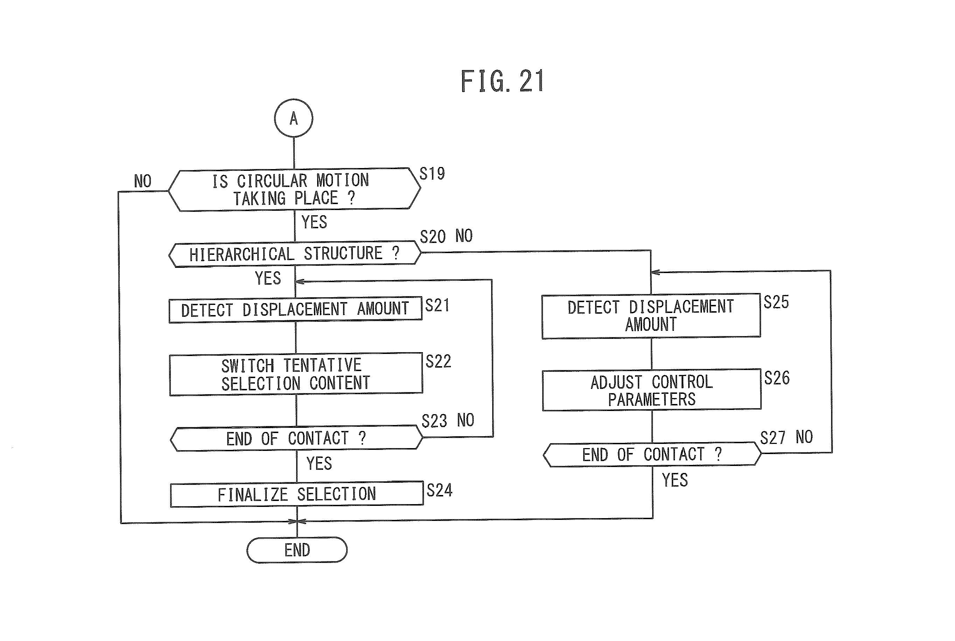

FIGS. 20 and 21 are first and second flowcharts of general controls performed by the display apparatus 12 according to the present embodiment. In step S11 of FIG. 20, the display apparatus 12 judges whether or not there is contact with the touch panel 40. If there is no contact (step S11: NO), step S11 is repeated. If there is contact (step S11: YES), then in step S12, the display apparatus 12 detects the initial contact position. More specifically, it is judged whether the initial contact position is any one of the upper side part 150, the lower side part 152, the right side part 154, or the left side part 156 of the steering switch 30. Detection of the initial contact position is not limited to specifying a detailed area or coordinates on the touch panel 40 (details thereof will be described later).

In step S13, a selection screen corresponding to the initial contact position, which was detected in step S12, is displayed on the display panel 32 by the display apparatus 12. For example, in the case that the initial contact position is the upper side part 150 of the switch 30, an upper side screen (the upper side screen 122, 132, etc.) is displayed on the upper side of the icon 140 (see FIGS. 9 and 10). Further, in the case that the initial contact position is the lower side part 152 of the switch 30, a lower side screen is displayed on the lower side of the icon 140.

However, as noted above, if a screen is located on a lower side with respect to the upper side screen (upper side screen 122, 132, etc.), the screen (center screen 124, 134, etc.), which is not located on a lower side with respect to the icon 140, may be included in the lower side screen. Similarly, if a screen is located on an upper side with respect to the lower side screen, the screen (e.g., a screen in which the options are shown inside of the icon 140), which is not located on an upper side with respect to the icon 140, may be included in the upper side screen.

In step S14, the display apparatus 12 judges whether or not there is movement in the contact position. In the event there is movement in the contact position (step S14: YES), then in step S15, the display apparatus 12 judges whether or not the trajectory of the contact position is linear, or stated otherwise, whether or not the finger 64 is moving in a straight line.

If the finger 64 is moving linearly (step S15: YES), then in step S16, the display apparatus 12 carries out a pattern judgment as to whether or not the trajectory of the straight line movement is of a pattern (onboard device selection pattern) for selecting a specified onboard device. For example, as described above, in the case that the initial contact position is on the lower side part 152 of the switch 30, and thereafter, the finger 64 is moved linearly toward the upper side, the pattern is judged to be a pattern for selecting the audio device 20 (see FIG. 18).

Next, in step S17, in the case that the trajectory of the linear movement is a specified onboard device selection pattern and switching of the operation target device is required (step S17: YES), then in step S18, the display apparatus 12 switches the operation target device to the device corresponding to the pattern. If the trajectory of the linear movement is not a specified onboard device selection pattern and switching of the operation target device is not required (step S17: NO), then the current process is brought to an end.

Returning to step S15, if the finger 64 is not moving linearly (step S15: NO), then in step S19 of FIG. 21, the display apparatus 12 judges whether or not the trajectory of the contact position is circular, or stated otherwise, whether or not the finger 64 is making a circular movement. In the present embodiment, this judgment is carried out by the displacement amount of the rotary knob 56. However, as will be described later, such a judgment can be made by a different method.

If a circular movement is not being made (step S19: NO), then the current process is brought to an end. On the other hand, if a circular movement is being made (step S19: YES), then if the option corresponding to the initial contact position is of a hierarchical structure (step S20: YES), then in step S21, the display apparatus 12 detects the amount of circular movement (i.e., the displacement amount of the rotary knob 56). In the present embodiment, the displacement amount is an amount of displacement from the initial contact position. Alternatively, a difference in displacement between a previous operation period and the current operation period may be used.

In step S22, the display apparatus 12 switches the tentatively selected content based on the initial contact position and the displacement amount. For example, in the case that the operation target device is the audio device 20, the HDD 100 is selected as the sound source, and the lower side part 152 of the steering switch 30 is the initial contact position, switching of the album is carried out corresponding to the displacement amount of the rotary knob 56 (see FIG. 10).

In step S23, the display apparatus 12 judges whether or not the finger 64 has separated away from the switch 30, and whether contact of the finger 64 with respect to the touch panel 40 has ended. If contact has not ended (step S23: NO), the procedure returns to step S21. If contact has ended (step S23: YES), then in step S24, the display apparatus 12 finalizes the selection concerning the option (menu option) that has been tentatively selected. In addition, the display apparatus 12 makes the operation target device implement the process or the control corresponding to the option whose selection was finalized.

Returning to step S20, if the option corresponding to the initial contact position is not of a hierarchical structure (step S20: NO), then in step S25, the display apparatus 12 detects the amount of displacement of the rotary knob 56. Next, in step S26, the display apparatus 12 adjusts the control parameters corresponding to the displacement amount of the knob 56. For example, in the case that the audio device 20 is the operation target device and the left side part 156 of the switch 30 corresponding to volume is the initial contact position, then if the circular motion is clockwise, the volume is increased, whereas if the circular motion is counterclockwise, the volume is decreased. In this case, the control parameter is adjusted, even if contact is not ended.

Next, in step S27, the display apparatus 12 judges whether or not the finger 64 has separated away from the switch 30, and whether contact has ended. If contact has not ended (step S27: NO), the procedure returns to step S25. If contact has ended (step S27: YES), the current process is brought to an end.

Returning to step S14 of FIG. 20, if the contact position is not moving (step S14: NO), then in step S28, the display apparatus 12 judges whether or not the finger 64 has separated away from the switch 30 and that contact has ended. If contact has not ended (step S28: NO), the procedure returns to step S14. If contact has ended (step S28: YES), the current process is brought to an end.

### 3. Advantages of the Present Embodiment

As described above, according to the present embodiment, a tier (e.g., an upper-level layer, a middle-level layer, a lower-level layer) is selected by contact with the touch panel 40 (contact part) (see FIGS. 9 and 10 and step S13 of FIG. 20). Further, the plurality of options (menu options) included in the selected tier can be shifted through and tentatively selected (step S22), in accordance with a gesture by which the contact position is moved while the state of contact with the touch panel 40 is maintained (step S19: YES of FIG. 21). Furthermore, when contact of the user with respect to the touch panel 40 is ended (step S23: YES), selection of the option that is tentatively selected at that time is finalized, and a function or process of an onboard device is implemented corresponding to the option whose selection has been finalized (step S24).

Accordingly, with a "touch, move, and detach" series of operations, which is performed only one time, selection of a tier, tentative selection of an option, and finalizing the selection of the option are enabled. Consequently, selection of tiers and options is facilitated, and the operation time can be shortened. Additionally, along with shortening the operation time, driver distraction can be prevented.

In the present embodiment, the touch panel 40 is divided and arranged sequentially at least into a number of areas corresponding to the number of tiers that are capable of being displayed on the display panel 32 (display unit) from among the plural tiers. For example, in the example of FIG. 10, the display panel 32 is divided and arranged sequentially into three areas, made up of sound sources (upper side screen 132), albums (center screen 134), and musical titles (right side screen 136), which are included in a hierarchical structure. Further, the display ECU 34 (gesture judgment unit) continues to shift through the plural options that are included in the tier corresponding to the initial contact position, until the user comes out of contact with the touch panel 40 (steps S21 through S23 of FIG. 21).

Consequently, for example, even in the case that an association is established between the plural tiers and the areas where contact is started (upper side part 150, lower side part 152, and right side part 154 of the steering switch 30) and that the respective areas are arranged sequentially, as long as the state of contact with the touch panel 40 is maintained, the tentatively selected tier is not switched to. Therefore, by increasing the degree of freedom of the operation (gesture) in relation to the tiers during tentative selection thereof, the operation time can be shortened, and driver distraction can be reduced.

In the present embodiment, the operating element for carrying out operations of the respective onboard devices is the steering switch 30, which is disposed on the steering handle 36, and the touch panel 40 is divided and arranged on the outer peripheral side of the switch 30 into a number of areas (e.g., three areas, in the case of an upper-level layer, a middle-level layer, and a lower-level layer) corresponding at least to the number of tiers (see FIGS. 9 and 10). Further, the display panel 32 displays the icon 140 that corresponds to the shape of the switch 30, together with displaying the plural options (menu options) included within the tier corresponding to the initial contact position when the user contacts the switch 30 (step S13 of FIG. 20). In addition, the display panel 32 is capable of switching between the plurality of options by the user making a gesture (circular motion) while touching the touch panel 40 along the outer peripheral side of the switch 30 (step S19 of FIG. 21: YES → step S20: YES → step S21 → step S22 → step S23).

Consequently, even if the operating element is provided on the steering switch 30, the icon 140 corresponding to the shape of the switch 30 is displayed on the display panel 32, and the options of the tier are displayed around the periphery of the icon 140. Therefore, the operations can easily be understood by the user, and the occurrence of driver distraction can be reduced.

In the present embodiment, the display panel 32 allocates the areas that display the plurality of options to each of the tiers and at each of respective predetermined angles around a central vicinity of the icon 140 (every 180° in the case of FIG. 9, every 90° in the case of FIG. 10). Further, the display ECU 34 selects the tier corresponding to the initial contact position and the areas that display the plurality of options (FIGS. 9 to 17). Accordingly, the plurality of options for each of the tiers are displayed around the periphery of the icon 140 corresponding to the shape of the steering switch 30 and the initial contact position of the touch panel 40. Therefore, the area that has been touched and which tier has been selected can easily be comprehended by the user, and thus, the operation time can be shortened, and driver distraction can be reduced.

In the present embodiment, at the time that the circular motion is judged by the display ECU 34 (step S19 of FIG, 21: YES), the display panel 32 is made to shift through the plurality of options following the circular movement around the periphery of the icon 140 (step S21, step S22). Together therewith, in the case that the tiers comprise tiers made up from options of information in the form of character strings (e.g., the musical titles shown in FIG. 10), the display position of the tier corresponding to the options (the right side screen 136) is set by the display panel 32 on the right side with respect to the icon 140 as viewed from the perspective of the user.

In the event that the "musical titles" (song names), as options of information in the form of character strings, are shifted through along the periphery of the icon 140, by the arrangement thereof being on the right side with respect to the icon 140, the display area can be minimized.

In FIG. 10, the touch panel 40 is divided into areas in at least three directions (i.e., upper, lower, and right directions) from among upper, lower, left, and right directions as viewed from the perspective of the user. The basic screen 130 (the display area 160 in the display panel 32) is of a rectangular shape with a longitudinal direction thereof lying horizontally, i.e., to right and left as viewed from the perspective of the user. Further, the plural options (the upper side screen 132, the center screen 134, and the right side screen 136) for each of the tiers are displayed around the periphery of the icon 140, and three tiers (sound sources as an upper-level layer, albums as a middle-level layer, and song titles as a lower-level layer) are displayed in three directions (upper, lower, and right) with respect to the icon 140. The plural options (sound sources) included in the upper-level layer are arranged and displayed on the upper side, the plural options (albums) included in the middle-level layer are arranged and displayed on the lower side, and the plural options (musical titles) included in the lower-level layer are arranged and displayed on the right side.

The options for the lower-level layer (musical titles) are character strings showing detailed information, and by the character strings being arranged on the right side of the icon 140, the basic screen 130 (the display area 160 in the display panel 32) can be reduced in size, together with enabling the information to be seen easily. Furthermore, by arranging the upper-level layer on the upper side of the icon 140, an intuitive operation is made possible, thus leading to a reduction in driver distraction.

In the present embodiment, the display ECU 34 determines as the gesture a physical rotating operation of the rotary knob 56 of the steering switch 30. Owing to this feature, since the knob 56 actually is rotated, the user can easily recognize the amount of rotation, and the amount of rotation and shifting through the options can easily be linked in association with one another. Consequently, operability can be enhanced.

### B. Modifications

The present invention is not limited to the above embodiment, but various modified configurations may be adopted based on the disclosed content of the present specification. For example, the following configurations can be adopted.

### 1. Objects Capable of Incorporating the Display Apparatus

In the above embodiment, the display apparatus 12 is incorporated in a vehicle 10. However, the display apparatus 12 may be incorporated in other types of objects. For example, the display apparatus 12 can be incorporated in mobile objects such as trains, ships, aircrafts, etc. Alternatively, the display apparatus 12 may be incorporated in machine tools or electric products.

### 2. Steering Switch 30 (Operating Element)

### [2-1. Arrangement]

In the above-described embodiment, the switch 30 is arranged on the steering handle 36 (see FIG. 2). However, insofar as the onboard devices are capable of being operated, the switch 30 may be disposed at a different position (for example, on the steering column or the instrument panel) apart from being arranged on the steering handle 36.

### [2-2. Configuration]

In the above embodiment, the steering switch 30 includes the touch panel 40 and the rotary knob 56. However, insofar as it is possible to detect operations (e.g., movements of the finger 64) of the user, different configurations may be provided.

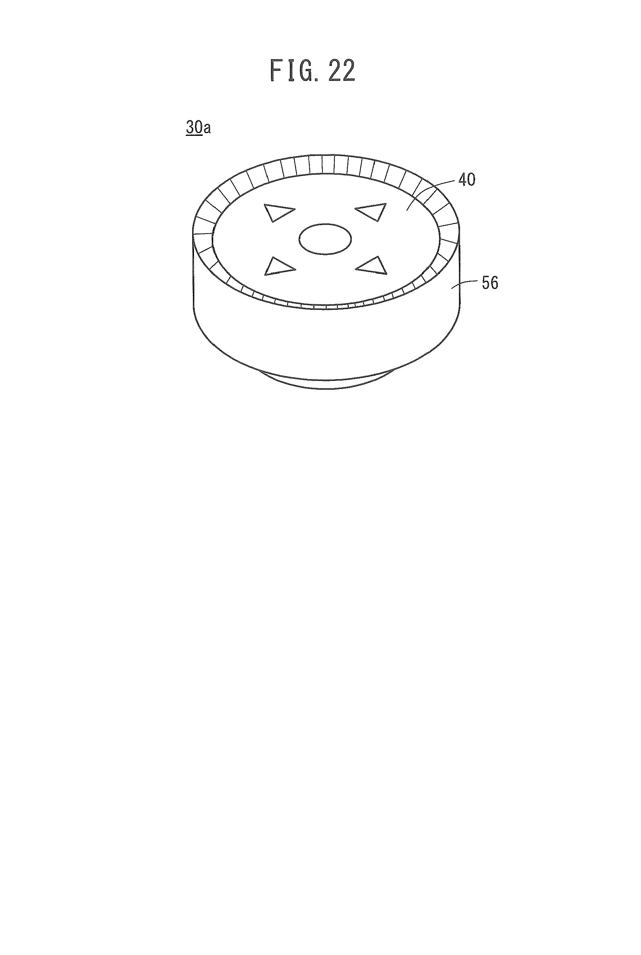

FIG. 22 is a perspective view of a steering switch 30a (also referred to below as a "switch 30a") according to a first modification. With the switch 30 of the above embodiment, the rotary knob 56 is rotated independently from the touch panel 40. However, with the switch 30a according to the first modification, the touch panel 40 is fixed to the rotary knob 56, whereby the rotary knob 56 is rotated together with the touch panel 40. In this case, the switch 30a is equipped with a non-illustrated inclination sensor, and the upper side of the switch 30a is continuously detected by the inclination sensor.

By this feature, similar to the above embodiment, since the switch 30a actually is rotated, the user can easily recognize the amount of rotation, and the amount of rotation and shifting through the options (menu options) can easily be linked in association with one another. Consequently, operability can be enhanced.

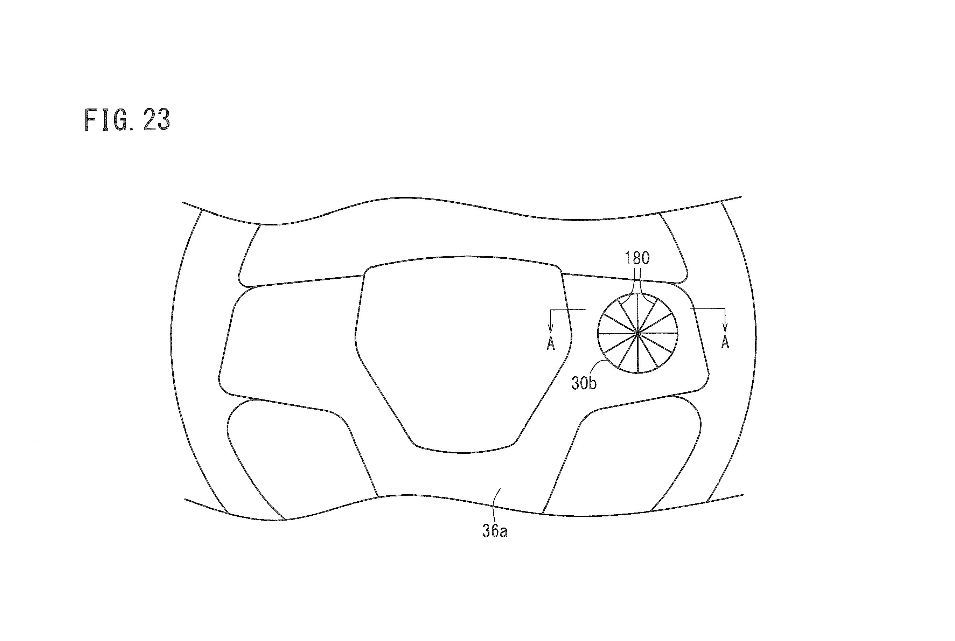

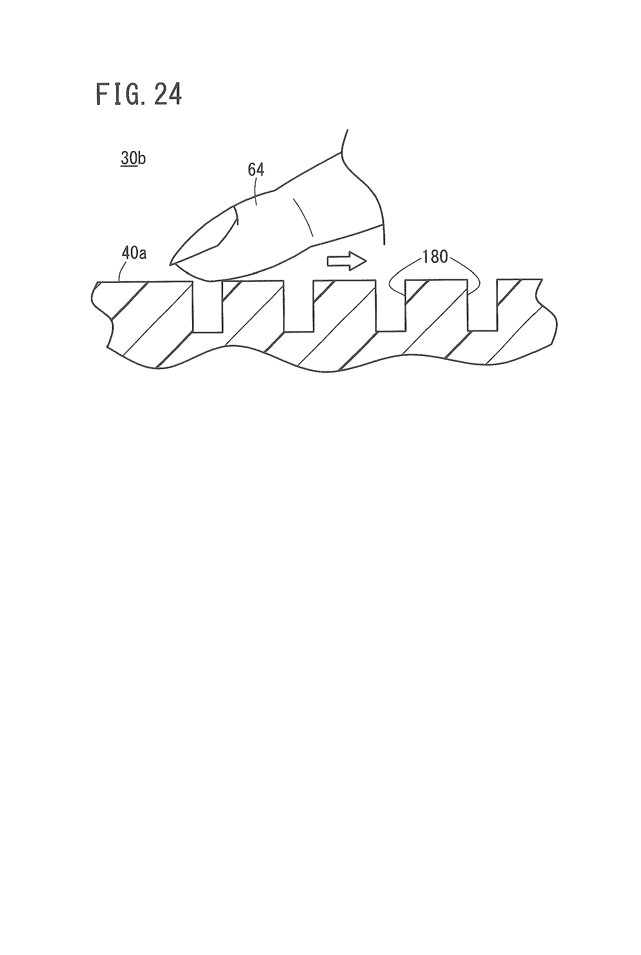

FIG. 23 is an external front view of a steering handle 36a on which a steering switch 30b (also referred to below as a "switch 30b") is arranged according to a second modification. FIG. 24 is a cross sectional view taken along line A-A of FIG. 23. The switch 30 of the above-described embodiment and the switch 30a according to the first modification both include the rotary knob 56. However, the switch 30b according to the second modification includes the touch panel 40a, but does not have the rotary knob 56.

Further, as shown in FIGS. 23 and 24, a plurality of notches 180, which are disposed in a radiating manner, are formed in the touch panel 40a. The notches 180 are formed at each of movement amounts by which the respective options are shifted through when the finger 64 makes a circular motion. The phrase "each of movement amounts by which the respective options are shifted" implies not only a case in which the distance between adjacent notches 180 corresponds to one switching event of the options, but also a case in which multiple notches 180 are spanned over to switch the options one time. By means of the notches 180 that are provided in this manner, the user can comprehend the movement amount at the time that the gesture is made. Further, the user (driver) can easily recognize how the finger 64 is moving with respect to the switch 30b, or more specifically, whether a circular movement or a linear movement is being carried out.

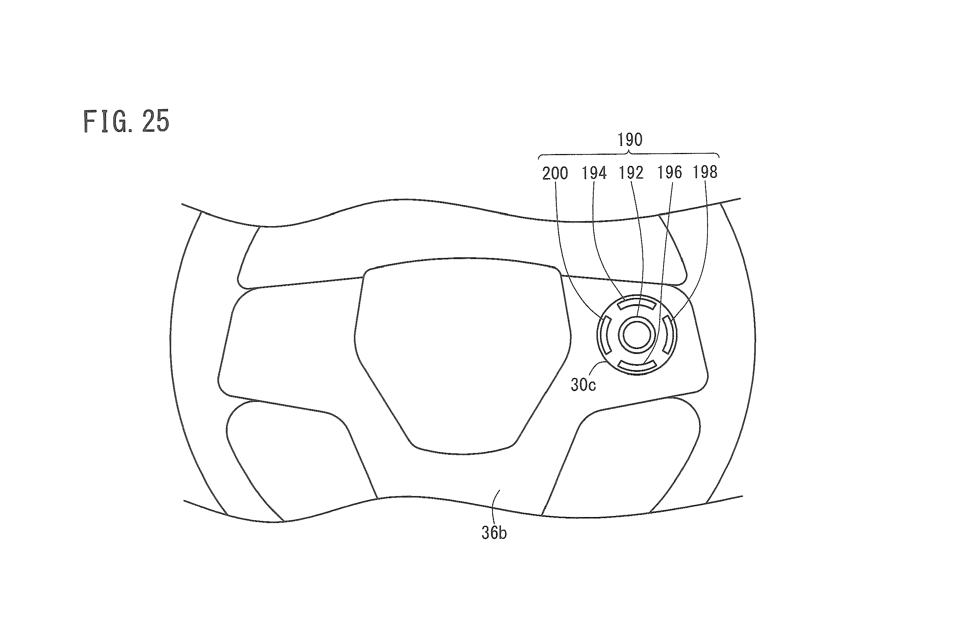

FIG. 25 is an external front view of a steering handle 36b on which a steering switch 30c (also referred to below as a "switch 30c") is arranged according to a third modification. Similar to the switch 30b according to the second modification, the switch 30c according to the third modification does not have the rotary knob 56.

The switch 30c includes a contact sensor 190 that is divided into a plurality of regions. The contact sensor 190 includes a center part 192, an upper side part 194, a lower side part 196, a right side part 198, and a left side part 200.

Each of the respective parts 192, 194, 196, 198, 200 functions as a contact part for detecting contact of the finger 64. More specifically, the respective parts 192, 194, 196, 198, 200, for example, are electrostatic capacitive type contact detectors, which detect movement (in this case, a circular movement) of the finger 64.

Unlike the switch 30 of the above-described embodiment, the respective parts 194, 196, 198, 200 of the switch 30c are associated completely with functions or processes of the respective onboard devices. For example, in the case that the operation target device is the audio device 20, the upper side part 194 is used only for selecting the sound source, and even if the finger 64 is not separated away from the contact sensor 190, selection of the source may be finalized upon elapse of a fixed time period (for example, any value between 0.5 to 2 seconds) after separating from the upper side part 194. In the case it is not desired to finalize selection of the source, within the aforementioned fixed time period, the finger 64 may be moved into contact again with the upper side part 194.

With the above-described embodiment and the first through third modifications, any of the switches 30 and 30a through 30c is basically of a circular shape as viewed from the front. However, so long as the options (menu options) are capable of being selected, the basic shape of the switches is not limited to a circular shape. For example, the basic shaped may be of a rectangular shape with the four vertices thereof arranged in up, down, left, and right directions. Alternatively, the basic shape may be of a cross-like shape, as shown in JP 2012-022393A. Alternatively, the basic shape may be of a lateral or longitudinal rectangular shape.

With the above-described embodiment and the first through third modifications, the region itself (for example, the touch panel 40) that detects contact with the finger 64 is not deformable. However, the switch may be of a push type that is pressed by the finger 64 and retracted, and in which the contacted region rotates in a state of being pressed.

### [2-3. Other Features]

With the above-described embodiment and the first through third modifications, the steering switches 30, 30a, 30b, 30c are used as the operating elements for operating the onboard devices (the audio device 20 and the camera system 22). However, insofar as the functions or processes of the onboard devices can be implemented, the operating elements need not be the aforementioned steering switches. For example, switches as operating elements (having the same structure as the steering switches 30, 30a, 30b, and 30c) may be disposed at a different location, such as on the steering column, the instrument panel 70, or the like.

### 3. Onboard Devices

In the above-described embodiment, the audio device 20 and the camera system 22 have been cited as examples of the operation target devices. However, from the standpoint of being operated by the steering switch 30, the operation target devices are not limited to these cited examples. For example, either one of the audio device 20 or the camera system 22 may be used alone as the operation target device. Alternatively, any of a navigation device, an air conditioner, a head-up display, a hazard lamp, a driver's seat, a door mirror, a rear light, a driver seat side window, and a passenger seat side window may be used as the operation target device.

### 4. Control Content

### [4-1. Hierarchical Structure]

In the above-described embodiment, the hierarchical or tiered structure in relation to operations of the audio device 20 is constituted by three layers including an upper-level layer, a middle-level layer, and a lower-level layer (FIG. 11), and the hierarchical or tiered structure in relation to operations of the camera system 22 is constituted by three layers including an upper-level layer, a first lower-level layer, and a second lower-level layer (FIG. 13). However, the number of layers that make up the tiered structure may be at least two layers including an upper-level layer and a lower-level layer, or can be four or more layers, insofar as the display areas (e.g., the areas 162, 164, 166 of FIG. 12) of the options (menu options) of the respective plural tiers can be arranged separately on the display panel 32 or in the display area (e.g., the area 160 of FIG. 12) as a whole.

### [4-2. Detection of Initial Contact Position]

In the above embodiment, the initial contact position is judged as being any one of the upper side part 150, the lower side part 152, the right side part 154, and the left side part 156 of the steering switch 30 (step S12 of FIG. 20). Detection of the initial contact position is not limited to specifying a detailed area or coordinates on the touch panel 40, insofar as selection of a tier, which serves as an object to be selected, can be made at the time that contact is initiated. For example, with the switch 30c according to the third modification shown in FIG. 25, if contact with the upper side part 194 can be detected (stated otherwise, if the upper side part 194 itself serves as the initial contact position), the upper side screens 122, 132 can be displayed. Therefore, it is unnecessary to detect which of any of the positions of the upper side part 194 is the initial contact position.

### [4-3. Selection of Options (Menu Options)]

With the above embodiment, selection of options (menu options) is performed by rotating (with a circular motion of the finger 64) the rotary knob 56. However, insofar as selection of options can be made, the invention is not limited to this feature. For example, as with the steering switches 30a to 30c according to the first through third modifications, selection of options can be made without using the knob 56. Alternatively, switching of options can be performed responsive to a linear motion.

### [4-4. Selection of Operation Target Device]

In the present embodiment, although selection of the operation target device is carried out by a linear trajectory (a straight line movement of the finger 64) on the touch panel 40. However, from the standpoint of enabling selection of the operation target device, the invention is not limited to this feature. For example, switching of the operation target device may be performed responsive to a circular motion. Further, for example, in the case that the operation target device is fixed (i.e., limited to a specified onboard device) and selection is not available, it is acceptable for selection of the operation target device not to be performed.

### [4-5. Display of Screens]

In the above-described embodiment, a screen which corresponds to the initial contact position (the upper side screen 122, the center screen 124, and the left side screen 126 of FIG. 9, and the upper side screen 132, the center screen 134, the right side screen 136, and the left side screen 138 of FIG. 10) is displayed when the finger 64 comes into contact with the touch panel 40 (step S13 of FIG. 20). However, from the standpoint of enabling display of options (menu options) on the display panel 32, the invention is not limited to this feature. For example, the respective screens may be arrayed alongside one another irrespective of whether or not contact with the touch panel is made.

With the above embodiment (FIGS. 9 and 10), the upper-level layer (sound sources) is displayed on the upper side of the icon 140, the middle-level layer (broadcast stations or albums) is displayed within and around the periphery of the icon 140, and the lower-level layer (musical titles) is displayed on the right side of the icon 140. However, from the standpoint of displaying the options (menu options) on the display panel 32, the invention is not limited to this feature. For example, the upper-level layer (sound sources) may be displayed on the right side of the icon 140, the middle-level layer (broadcast stations or albums) may be displayed on a lower side of the icon 140, and the lower-level layer (musical titles) may be displayed on the left side of the icon 140.

In the above embodiment, as displays that take place when contact of the finger 64 with the touch panel 40 is made, a display on the upper side of the icon 140 (upper side screens 122, 132), a display within and around the periphery of the icon 140 (center screens 124, 134), a display on the right side of the icon 140 (right side screen 136), and a display on the left side of the icon 140 (left side screens 126, 138) are used (see FIGS. 9 and 10). However, from the standpoint of enabling display of options (menu options) on the display panel 32, the invention is not limited to this feature. For example, the respective displays may be disposed in a linear arrangement, or in an arrangement corresponding to respective sides of a triangular shape, etc.

In the above embodiment, the screens to be displayed at one time on the display panel 32 are dedicated to operations of one operation target device (see FIGS. 9 and 10). However, a plurality of options of the operation target devices included respectively in the plural tiers may be displayed at one time on the display panel 32, insofar as the display areas (e.g., the areas 162, 164, 166 of FIG. 12) of the options (menu options) of the respective plural tiers can be arranged separately on the display panel 32 or in the display area (e.g., the area 160 of FIG. 12) as a whole. For example, the sound sources (upper-level layer), and the broadcast stations and albums (middle-level layer) of the audio device 20, and the target camera (upper-level layer) and the view angle (first lower-level layer) of the camera system 22 may be displayed at one time on the display panel 32.

### 5. Other Issues

In the above-described embodiment, when the respective options (sound sources, albums, song titles, etc.) are selected, content indicative of the respective options is displayed on the display panel 32. However, if attention is focused on operating the onboard devices, display of such content need not be carried out in all cases. More specifically, the onboard devices can be operated simply by operating the steering switch 30 without any content being displayed on the display panel 32.

## Claims

1. A vehicle display apparatus (12) that is mounted in a vehicle (10), and which displays a plurality of menu options included within plural tiers relating to operations of at least one onboard device (20, 22), comprising:
an operating element (30, 30a, 30b, 30c) that is capable of implementing a function or process of the onboard device (20, 22) in accordance with an operation of an occupant of the vehicle (10);
a gesture judgment unit (34) configured to determine a gesture made with respect to the operating element (30, 30a, 30b, 30c); and
a display unit (32) configured to display alongside one another the plurality of menu options respectively of the plural tiers, or to display the plurality of menu options of a specified tier corresponding to a contact position when the occupant contacts the operating element (30, 30a, 30b, 30c),
wherein the operating element (30, 30a, 30b, 30c) includes a contact part (40, 40a, 56, 190) that determines a contact of the occupant; and
wherein the gesture judgment unit (34) is configured to:
select the specified tier corresponding to a contact position from among the plural tiers, when the occupant contacts the contact part (40, 40a, 56, 190);
shift through and tentatively select the plurality of menu options included within the specified tier that was selected, in accordance with a gesture by which the contact position is moved while a state of contact with the contact part (40, 40a, 56, 190) is maintained; and
finalize a selection of the menu option that is tentatively selected at a point in time that contact of the occupant with respect to the contact part (40, 40a, 56, 190) is ended, and implement a function or process of the onboard device (20, 22) corresponding to the menu option whose selection has been finalized.

2. The vehicle display apparatus (12) according to claim 1, wherein:
the contact part (40, 40a, 56, 190) is divided and arranged sequentially at least into number of areas corresponding to number of tiers that are capable of being displayed on the display unit (32) from among the plural tiers; and
the gesture judgment unit (34) continues to shift through the plurality of menu options included within the specified tier until the occupant comes out of contact with the contact part (40, 40a, 56, 190).

3. The vehicle display apparatus (12) according to claim 1 or 2, wherein:
the operating element is a steering switch (30, 30a, 30b, 30c) that is disposed on a steering handle (36) of the vehicle (10);
the contact part (40, 40a, 56, 190) is divided and arranged on an outer peripheral side of the steering switch (30, 30a, 30b, 30c) at least into number of areas corresponding to the number of the tiers;
the display unit (32) displays a design (140) corresponding to a shape of the steering switch (30, 30a, 30b, 30c) together with displaying the plurality of menu options included respectively within the plural tiers alongside one another around periphery of the design (140) or inside of the design (140), or together with displaying the plurality of menu options included within the specified tier when the occupant contacts the steering switch (30, 30a, 30b, 30c); and
the plurality of menu options can be shifted through by a moving gesture while the occupant touches the contact part (40, 40a, 56, 190) along the outer peripheral side of the steering switch (30, 30a, 30b, 30c).

4. The vehicle display apparatus (12) according to claim 3, wherein:
the display unit (32) allocates the areas that display the plurality of menu options to each of the tiers and at each of respective predetermined angles around a central vicinity of the design (140); and
the gesture judgment unit (34) selects the tier corresponding to the contact position and the areas that display the plurality of menu options.

5. The vehicle display apparatus (12) according to claim 4, wherein:
at the time that the gesture is judged by the gesture judgment unit (34), the display unit (32) is made to shift through the plurality of menu options following the movement of the gesture around the periphery of the design (140); and
in a case that the tiers comprise tiers made up from menu options of information in form of character strings, a display position of the tier corresponding to the menu option is set by the display unit (32) on a left side or a right side with respect to the design (140) as viewed from perspective of the occupant.

6. The vehicle display apparatus (12) according to claim 5, wherein:
the contact part (40, 40a, 56, 190) is divided into areas in at least three directions from among upper, lower, left, and right directions as viewed from the perspective of the occupant;
the display unit (32) is of a rectangular shape with a longitudinal direction thereof lying horizontally as viewed from the perspective of the occupant, and displays the plurality of menu options for each of the tiers around the periphery of the design (140), and three tiers at least in the three directions with respect to the design (140);
the plurality of menu options included in a highest ranking first tier from among the three tiers are arranged and displayed in an upper position of the upper, lower, left and right positions;
the plurality of menu options included in a next highest ranking second tier from among the three tiers are arranged and displayed in a lower position of the upper, lower, left and right positions; and
the plurality of menu options included in a lowest ranking third tier from among the three tiers are arranged and displayed in a left or right position of the upper, lower, left and right positions.

7. The vehicle display apparatus (12) according to any one of claims 3 through 6, wherein, if the gesture is made up from a circular movement, the contact part (40a) includes notches (180) at each of movement amounts that serve to shift through the plurality of menu options.

8. The vehicle display apparatus (12) according to any one of claims 3 through 6, wherein the gesture judgment unit (34) determines a physical rotating operation of the steering switch (30, 30a, 30b, 30c) as the gesture.

## Amended claims

### Amended claims under Art. 19.1 PCT

1. (Amended) A vehicle display apparatus (12) that is mounted in a vehicle (10), and which displays a plurality of menu options included within plural tiers relating to operations of at least one onboard device (20, 22), comprising:
an operating element (30, 30a) that is capable of implementing a function or process of the onboard device (20, 22) in accordance with an operation of an occupant of the vehicle (10);
a display unit (32) configured to display alongside one another the plurality of menu options respectively of the plural tiers, or to display the plurality of menu options of a specified tier corresponding to a contact position when the occupant contacts the operating element (30, 30a); and
a display control unit (34) configured to control display of the display unit (32),
wherein the operating element (30, 30a) includes:
a contact part (40) that determines a contact of the occupant;
a rotary knob (56) disposed on outer periphery of the contact part (40); and
a detecting unit (42) configured to detect a circular motion of the rotary knob (56);
wherein the display control unit (34) is configured to:
select the specified tier corresponding to a contact position from among the plural tiers, when the occupant contacts the contact part (40);
shift through and tentatively select the plurality of menu options included within the specified tier that was selected, in accordance with a rotating operation by which the rotary knob (56) is rotated while a state of contact with the contact part (40) is maintained; and
finalize a selection of the menu option that is tentatively selected at a point in time that contact of the occupant with respect to the contact part (40) is ended, and implement a function or process of the onboard device (20, 22) corresponding to the menu option whose selection has been finalized.

2. (Amended) The vehicle display apparatus (12) according to claim 1, wherein:
the contact part (40) is divided and arranged sequentially at least into number of areas corresponding to number of tiers that are capable of being displayed on the display unit (32) from among the plural tiers; and
the display control unit (34) continues to shift through the plurality of menu options included within the specified tier until the occupant comes out of contact with the contact part (40).

3. (Amended) The vehicle display apparatus (12) according to claim 1 or 2, wherein:
the operating element is a steering switch (30, 30a) that is disposed on a steering handle (36) of the vehicle (10);
the contact part (40) is divided and arranged on an outer peripheral side of the steering switch (30, 30a) at least into number of areas corresponding to the number of the tiers;
the display unit (32) displays a design (140) corresponding to a shape of the steering switch (30, 30a) together with displaying the plurality of menu options included respectively within the plural tiers alongside one another around periphery of the design (140) or inside of the design (140), or together with displaying the plurality of menu options included within the specified tier when the occupant contacts the steering switch (30, 30a); and
the plurality of menu options can be shifted through by the rotating operation while the occupant touches the contact part (40) along the outer peripheral side of the steering switch (30, 30a).

4. (Amended) The vehicle display apparatus (12) according to claim 3, wherein:
the display unit (32) allocates the areas that display the plurality of menu options to each of the tiers and at each of respective predetermined angles around a central vicinity of the design (140); and
the display control unit (34) selects the tier corresponding to the contact position and the areas that display the plurality of menu options.

5. (Amended) The vehicle display apparatus (12) according to claim 4, wherein:
at the time that the rotating operation is judged by the display control unit (34), the display unit (32) is made to shift through the plurality of menu options following the movement of the rotating operation around the periphery of the design (140); and
in a case that the tiers comprise tiers made up from menu options of information in form of character strings, a display position of the tier corresponding to the menu option is set by the display unit (32) on a left side or a right side with respect to the design (140) as viewed from perspective of the occupant.

6. (Amended) The vehicle display apparatus (12) according to claim 5, wherein:
the contact part (40) is divided into areas in at least three directions from among upper, lower, left, and right directions as viewed from the perspective of the occupant;
the display unit (32) is of a rectangular shape with a longitudinal direction thereof lying horizontally as viewed from the perspective of the occupant, and displays the plurality of menu options for each of the tiers around the periphery of the design (140), and three tiers at least in the three directions with respect to the design (140);
the plurality of menu options included in a highest ranking first tier from among the three tiers are arranged and displayed in an upper position of the upper, lower, left and right positions;
the plurality of menu options included in a next highest ranking second tier from among the three tiers are arranged and displayed in a lower position of the upper, lower, left and right positions; and
the plurality of menu options included in a lowest ranking third tier from among the three tiers are arranged and displayed in a left or right position of the upper, lower, left and right positions.

7. (Cancelled)

8. (Cancelled)
